(19) Europäisches Patentamt
European Patent Office
Office européen des brevets

(11) **EP 4 312 458 A1**

(12) **EUROPEAN PATENT APPLICATION**

(43) Date of publication:
**31.01.2024 Bulletin 2024/05**

(21) Application number: **23160469.5**

(22) Date of filing: **07.03.2023**

(51) International Patent Classification (IPC):
*H04W 74/00* (2009.01)   *H04W 52/04* (2009.01)

(52) Cooperative Patent Classification (CPC):
**H04W 74/006; H04W 52/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 JP 2022122254**

(71) Applicant: **Sharp Kabushiki Kaisha**
**Sakai City, Osaka 590-8522 (JP)**

(72) Inventors:
• **NAMBA, Hideo**
**Sakai City, Osaka 590-8522 (JP)**
• **YAMADA, Ryota**
**Sakai City, Osaka 590-8522 (JP)**
• **SHIRAKAWA, Atsushi**
**Sakai City, Osaka 590-8522 (JP)**

(74) Representative: **Müller Hoffmann & Partner**
**Patentanwälte mbB**
**St.-Martin-Strasse 58**
**81541 München (DE)**

(54) **RADIO TERMINAL APPARATUS AND RADIO COMMUNICATION METHOD**

(57)     A base station apparatus transmits, to a terminal apparatus, SR link information including information indicating multiple terminal apparatuses supporting intra-BSS SR, a color index associated with the information indicating the terminal apparatuses, and information of a power detection level corresponding to a combination of the terminal apparatuses. The terminal apparatus receives the SR link information. The terminal apparatus receives a radio frame, and compares the power detection level determined based on the color index included in a PHY header of the radio frame being received, the multiple terminal apparatuses indicated by the color index, the information of the power detection level corresponding to the multiple terminal apparatuses indicated by the color index, and transmit power and received power of the radio frame being received. In a case that the received power of the radio frame being received is low, the terminal apparatus performs CCA reset, and transmits the radio frame with the transmit power configured. Intra-BSS SR is performed for data used by an application in which traffic with high priority and/or with low latency is specified to allow communication efficiency to be improved in coordination with the application.

FIG. 17

**Description**

Technical Field

The present invention relates to a radio terminal apparatus and a radio communication method.

Background Art

The Institute of Electrical and Electronics Engineers Inc. (IEEE) has been continuously working on updating of the IEEE 802.11 specification which is a wireless Local Area Network (LAN) standard in order to achieve an increase in speed and spectral efficiency of wireless LAN communication. In a wireless LAN, it is possible to perform radio communication using unlicensed bands that can be used without being allowed (licensed) by nations or regions. For applications for individuals, such as for domestic use, Internet accesses from inside residences has been wirelessly established by, for example, including wireless LAN access point functions in line termination apparatuses for connection to a Wide Area Network (WAN) line such as the Internet or connecting wireless LAN access point apparatuses (APs) to line termination apparatuses. In other words, wireless LAN station apparatuses (STAs) such as smartphones and PCs can associate to wireless LAN access point apparatuses and access the Internet.

Designing of the specification of IEEE 802.1 1ax was completed in February 2021, and wireless LAN devices that are compliant with the specification and communication apparatuses such as smartphones and Personal Computers (PCs) with wireless LAN devices equipped therein have appeared on the market as products that are compliant with Wi-Fi 6 (trade name; a name for IEEE 802.1 1ax compliant products certified by the Wi-Fi Alliance). Also, activities for standardizing IEEE 802.11be as a standard subsequent to IEEE 802.11ax have been started in recent days. With the rapid distribution of wireless LAN devices, further improvement in throughput per user in environments where wireless LAN devices are densely disposed has been studied in the standardization of IEEE 802.11be.

According to the IEEE 802.11n and following standards, a mechanism of frame aggregation has been introduced as a throughput speed-up technology through reduction of an overhead. Frame aggregation is roughly classified into an Aggregated MAC Service Data Unit (A-MSDU) and an Aggregated MAC Protocol Data Unit (A-MPDU). While the frame aggregation enables transmission of a large amount of data at once and improves the transmission efficiency, the probability of a transmission error is increased. Thus, IEEE 802.11ax and following standards are expected to introduce efficient error control on each MPDU in addition to improvement of transmission efficiency through frame aggregation as the main underlying technologies for increasing the speed of throughput. Improvement in transmission efficiency is expected with adoption of mechanisms for increasing Transmit opportunities (TXOPs), such as Orthogonal Frequency Division Multiple Access (OFDMA) and inter-BSS spatial reuse.

Citation List

Non Patent Literature

NPL 1: IEEE 802.11-20/1046-08-0be, July. 2020

Summary of Invention

Technical Problem

With the wireless LAN devices having become widespread, urban areas have more areas in which the wireless LAN devices are used, and depending on a place, some two-digit number of wireless LAN devices are used nearby. In a case that traffic is increased in such a congested environment and Carrier Sense Multiple Access (CSMA)-based radio medium access used in the IEEE 802.11 specifications is performed, time in which the TXOPs can be obtained is reduced due to occurrence of collision and occurrence of exposed nodes, which reduces transmission efficiency. The IEEE 802.1 1ax standards adopt the Inter-BSS spatial reuse technology, and alleviate partially, not fully, the problems.

The present invention is made in view of the circumstances described above, and discloses a communication apparatus and a communication method to enable increase of opportunities in which TXOPs can be obtained, enhancement in transmission efficiency, and reduction in latency by implementing spatial reuse operation within the same radio system (BSS).

Solution to Problem

A communication apparatus and a communication method according to the present invention for solving the aforementioned problem are as follows.

(1) Specifically, a radio terminal apparatus according to an aspect of the present invention includes: a transmitter configured to transmit a transmission frame; and a receiver configured to receive a reception frame. The receiver receives SR link information and the reception frame. The SR link information includes information indicating a second radio terminal apparatus, information indicating a third radio terminal apparatus, a color index associated with the information indicating the second radio terminal apparatus and the information indicating a third radio terminal apparatus, and information of a power detection level applied to a combination of the second radio terminal apparatus and the third radio terminal apparatus. The color index is included in a PHY header of the reception frame being received. In a case that a fourth radio terminal apparatus is different from the second radio terminal apparatus and the third radio terminal apparatus and received power of the reception frame being received falls below the power detection level determined based on transmit power and the information of the power detection level applied to the combination of the second radio terminal apparatus and the third radio terminal apparatus, CCA reset is performed.

(2) In the radio terminal apparatus according to an aspect of the present invention, after performing the CCA reset, the radio terminal apparatus transmits, to the fourth radio terminal apparatus, the transmission frame with the transmit power.

(3) In the radio terminal apparatus according to an aspect of the present invention, in a case that the fourth radio terminal apparatus is the second radio terminal apparatus or the third radio terminal apparatus, the radio terminal apparatus does not perform the CCA reset.

(4) In the radio terminal apparatus according to an aspect of the present invention, in a case that information of disallowing intra-BSS SR is not included in the PHY header of the reception frame being received, the radio terminal apparatus performs the CCA reset.

(5) A radio terminal apparatus according to an aspect of the present invention includes: a transmitter configured to transmit a transmission frame; and a receiver configured to receive a reception frame. The receiver receives SR link information. The SR link information at least includes information indicating a fifth radio terminal apparatus, information indicating a sixth radio terminal apparatus, and a color index associated with the information indicating the fifth radio terminal apparatus and the information indicating the sixth radio terminal apparatus. In a case that direct link is performed for the sixth radio terminal apparatus, the color index is included in a PHY header of the transmission frame.

(6) A radio communication method according to an aspect of the present invention includes: receiving SR link information and a reception frame, the SR link information including information indicating a second radio terminal apparatus, information indicating a third radio terminal apparatus, a color index associated with the information indicating the second radio terminal apparatus and the information indicating a third radio terminal apparatus, and information of a power detection level applied to a combination of the second radio terminal apparatus and the third radio terminal apparatus, the color index being included in a PHY header of the reception frame being received; and in a case that a fourth radio terminal apparatus is different from the second radio terminal apparatus and the third radio terminal apparatus, and received power of the reception frame being received falls below the power detection level determined based on transmit power and the information of the power detection level applied to the combination of the second radio terminal apparatus and the third radio terminal apparatus, performing CCA reset.

(7) A radio communication method according to an aspect of the present invention includes: receiving SR link information, the SR link information at least including information indicating a fifth radio terminal apparatus, information indicating a sixth radio terminal apparatus, and a color index associated with the information indicating the fifth radio terminal apparatus and the information indicating the sixth radio terminal apparatus; and in a case that direct link is performed for the sixth radio terminal apparatus, including the color index in a PHY header of a transmission frame.

Advantageous Effects of Invention

According to the present invention, a contribution to enhancement in communication efficiency can be made in communication using a radio communication apparatus in conformity to the IEEE 802.11 standards.

Brief Description of Drawings

FIG. 1 is a schematic diagram illustrating examples of splitting radio resources according to an aspect of the present invention.

FIG. 2 is a diagram illustrating an example of a frame configuration according to an aspect of the present invention.

FIG. 3 is a diagram illustrating an example of a frame configuration according to an aspect of the present invention.

FIG. 4 is a diagram illustrating an example of communication according to an aspect of the present invention.

FIG. 5 is a diagram illustrating a configuration example of a communication system according to an aspect of the present invention.

FIG. 6 is a block diagram illustrating a configuration example of a radio communication apparatus according to an aspect of the present invention.

FIG. 7 is a block diagram illustrating a configuration example of a radio communication apparatus according to an aspect of the present invention.

FIG. 8 is a schematic diagram of radio frame transmission according to an aspect of the present invention.

FIG. 9 is a schematic diagram illustrating an example of a frame format according to an aspect of the present invention.

FIG. 10 is a diagram illustrating a configuration example of base station apparatuses and terminal apparatuses according to an aspect of the present invention.

FIG. 11 is a diagram illustrating a configuration example of a base station apparatus and terminal apparatuses according to an aspect of the present invention.

FIG. 12 is a diagram illustrating an example of a message flow between the radio communication apparatuses according to an aspect of the present invention.

FIG. 13 is a diagram illustrating an example of a message flow between the radio communication apparatuses according to an aspect of the present invention.

FIG. 14 is a diagram illustrating an example of a power detection level and transmit power according to an aspect of the present invention.

FIG. 15 is a diagram illustrating an example of information elements according to an aspect of the present invention.

FIG. 16 is a diagram illustrating an example of a message flow between the radio communication apparatuses according to an aspect of the present invention.

FIG. 17 is a diagram illustrating timing of transmission and/or reception according to an aspect of the present invention.

FIG. 18 is a diagram illustrating timing of transmission and/or reception according to an aspect of the present invention.

Description of Embodiments

A communication system according to the present embodiment includes an access point apparatus (also referred to as a base station apparatus) and multiple station apparatuses (or also referred to as multiple terminal apparatuses, or multiple radio terminal apparatuses). Also, the communication system and a network including the access point apparatus and the station apparatus will be referred to as a Basic service set (BSS: management range or cell). In addition, the station apparatus according to the present embodiment can have functions of the access point apparatus. Similarly, the access point apparatus according to the present embodiment may have functions of a station apparatus (also referred to as a terminal apparatus). Therefore, in a case that a communication apparatus or a radio communication apparatus is simply mentioned below, the communication apparatus or the radio communication apparatus can indicate both the station apparatus and the access point apparatus. The access point apparatus may communicate with another access point apparatus.

The base station apparatus and the terminal apparatus in the BSS are assumed to perform communication based on Carrier sense multiple access with collision avoidance (CSMA/CA). Although the present embodiment is intended for an infrastructure mode in which a base station apparatus performs communication with multiple terminal apparatuses, the method of the present embodiment can also be performed in an ad hoc mode in which terminal apparatuses perform communication directly with each other. In the ad hoc mode, the terminal apparatuses substitute the base station apparatus to form a BSS. The BSS in the ad hoc mode will also be referred to as an Independent Basic Service Set (IBSS). In the following description, a terminal apparatus that forms an IBSS in the ad hoc mode can also be considered to be a base station apparatus. The method of the present embodiment can also be performed in Peer to Peer (P2P) communication in which the terminal apparatuses perform communication directly with each other. One of methods for performing P2P communication is Tunneled Direct Link Setup (TDLS). In TDLS, traffic flowing between terminal apparatuses associated to the base station apparatus is directly transmitted and/or received between the terminal apparatuses without intervention of the base station apparatus. The method of the present embodiment can also be performed in Wi-Fi Direct (trade name). In Wi-Fi Direct, the terminal apparatus forms a Group instead of the base station apparatus. Hereinafter, a terminal apparatus as a Group owner forming a Group in Wi-Fi Direct can also be regarded as a base station apparatus.

In an IEEE 802.11 system, each apparatus can transmit transmission frames of multiple frame types in a common frame format. Each of transmission frames is defined as a Physical (PHY) layer, a Medium access control (MAC) layer, and a Logical Link Control (LLC) layer. The physical layer will also be referred to as a PHY layer, and the medium access control layer will also be referred to as a MAC layer.

A transmission frame of the PHY layer will be referred to as a physical protocol data unit (PPDU; PHY protocol data unit or physical layer frame). The PPDU includes a physical layer header (PHY header) including header information and the like for performing signal processing in the physical layer, a physical service data unit (PSDU, PHY service data unit, or MAC layer frame) that is a data unit processed in the physical layer, and the like. The PSDU can include an aggregated MAC protocol data unit (MPDU) (A-MPDU) in which multiple MPDUs serving as retransmission units in a radio section are aggregated.

A PHY header includes a reference signal such as a Short training field (STF) used for detection, synchronization, and the like of signals, a Long training field (LTF) used for obtaining channel information for demodulating data, and the like and a control signal such as a Signal (SIG) including control information for demodulating data. In addition, STFs are classified into a Legacy-STF (L-STF), a high throughput-STF (HT-STF), a Very high throughput-STF (VHT-STF), a High efficiency-STF (HE-STF), an Extremely High Throughput-STF (EHT-STF), and the like in accordance with corresponding standards, and LTFs and SIGs are also similarly classified into an L-LTF, an HT-LTF, a VHT-LTF, an HE-LTF, an L-SIG, an HT-SIG, a VHT-SIG, an HE-SIG, and an EHT-SIG depending on the corresponding standards. The VHT-SIG is further classified into VHT-SIG-A1, VHT-SIG-A2, and VHT-SIG-B. Similarly, the HE-SIG is classified into HE-SIG-A1 to 4 and HE-SIG-B. In addition, on the assumption of technology update in the same standard, a Universal SIGNAL (U-SIG) field including additional control information can be included.

Furthermore, the PHY header can include information for identifying a BSS of a transmission source of the transmission frame (hereinafter, also referred to as BSS identification information). The information for identifying a BSS can be, for example, a Service Set Identifier (SSID) of the BSS or a MAC address of a base station apparatus of the BSS. In addition, the information for identifying a BSS can be a value unique to the BSS (e.g., a BSS Color, etc.) other than an SSID or a MAC address.

The PPDU is modulated in accordance with the corresponding standard. In the IEEE 802.11n standard, for example, the PPDU is modulated into an Orthogonal frequency division multiplexing (OFDM) signal.

The MPDU includes a MAC layer header (MAC header) including header information and the like for performing signal processing in the MAC layer, a MAC service data unit (MSDU) that is a data unit processed in the MAC layer or a frame body, and a Frame check sequence (FCS) for checking whether there is an error in the frame. In addition, multiple MSDUs can be aggregated as an Aggregated MSDU (A-MSDU).

The frame types of transmission frames of the MAC layer are roughly classified into three frame types, namely a management frame for managing an association state and the like between apparatuses, a control frame for managing a communication state between apparatuses, and a data frame including actual transmission data, and each frame type is further classified into multiple subframe types. The control frame includes a reception completion notification (Acknowledge or Ack) frame, a transmission request (Request to send or RTS) frame, a reception preparation completion (Clear to send or CTS) frame, and the like. The management frame includes a Beacon frame, a Probe request frame, a Probe response frame, an Authentication frame, a connection request (Association request) frame, a connection response (Association response) frame, and the like. The data frame includes a Data frame, a polling (CF-poll) frame, and the like. Each apparatus can recognize the frame type and the subframe type of a received frame by interpreting contents of the frame control field included in the MAC header.

Further, an Ack may include a Block Ack. A Block Ack can give a reception completion notification with respect to multiple MPDUs. Also, Ack may include Multi STA Block Ack (M-BA) including a reception completion notification to multiple communication apparatuses.

The beacon frame includes a Field in which an interval at which a beacon is transmitted (Beacon interval) and an SSID are described. The base station apparatus can periodically broadcast a beacon frame within a BSS, and each terminal apparatus can recognize the base station apparatus in the surroundings of the terminal apparatus by receiving the beacon frame. The action of the terminal apparatus recognizing the base station apparatus based on the beacon frame broadcast from the base station apparatus will be referred to as Passive scanning. On the other hand, the action of the terminal apparatus searching for the base station apparatus by broadcasting a probe request frame in the BSS will be referred to as Active scanning. The base station apparatus can transmit a probe response frame in response to the probe request frame, and details described in the probe response frame are equivalent to those in the beacon frame.

The terminal apparatus recognizes the base station apparatus and performs a connection process with respect to the base station apparatus. The connection process is classified into an Authentication procedure and a connection (Association) procedure. The terminal apparatus transmits an authentication frame (authentication request) to the base station apparatus desiring a connection. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the terminal apparatus has been authenticated by the base station apparatus by interpreting the status code described in the authentication frame. Further, the base station apparatus and the terminal apparatus can exchange the authentication frame multiple times.

After the authentication procedure, the terminal apparatus transmits a connection request frame to the base station apparatus in order to perform the connection procedure. Once the base station apparatus receives the connection request frame, the base station apparatus determines whether to allow the connection to the terminal apparatus and transmits a connection response frame to notify the terminal apparatus of the intent. In the connection response frame, an Association identifier (AID) for identifying the terminal apparatus is described in addition to the status code indicating whether to perform the connection process. The base station apparatus can manage multiple terminal apparatuses by configuring different AIDs for the terminal apparatuses for which the base station apparatus has allowed connection.

After the connection process is performed, the base station apparatus and the terminal apparatus perform actual data transmission. In the IEEE 802.11 system, a Distributed Coordination Function (DCF), a Point Coordination Function (PCF), and mechanisms in which the aforementioned mechanisms are enhanced (an Enhanced distributed channel access (EDCA) or a hybrid control mechanism (Hybrid coordination function (HCF)), and the like) are defined. Although a case that the base station apparatus transmits signals to the terminal apparatus using the DCF will be described below as an example, the same also applies to a case that the terminal apparatus transmits signals to the base station apparatus using the DCF.

In the DCF, the base station apparatus and the terminal apparatus perform Carrier sensing (CS) for checking usage of a radio channel in the surroundings of the apparatuses prior to communication. For example, in a case that the base station apparatus serving as a transmitting station receives a signal of a higher level than a predefined Clear channel assessment level (CCA level) on a radio channel, transmission of transmission frames on the radio channel is postponed. Hereinafter, a state in which a signal of a level that is equal to or higher than the CCA level is detected on the radio channel will be referred to as a busy (Busy) state, and a state in which a signal of a level that is equal to or higher than the CCA level is not detected will be referred to as an idle (Idle) state. In this manner, CS performed based on power of a signal actually received by each apparatus (received power level) is called physical carrier sense (physical CS). Further, the CCA level is also called a carrier sense level (CS level) or a CCA threshold (CCAT). Note that in a case that a signal in a level that is equal to or higher than the CCA level is detected, the base station apparatus and the terminal apparatus start to perform an operation of demodulating at least a signal of the PHY layer.

The base station apparatus performs carrier sensing by an Inter-frame space (IFS) in accordance with the type of transmission frame to be transmitted and determines whether the radio channel is busy or idle. A period in which the base station apparatus performs carrier sensing varies depending on the frame type and the subframe type of a transmission frame to be transmitted by the base station apparatus. In the IEEE 802.11 system, multiple IFSs with different periods are defined, and there are a short frame interval (Short IFS or SIFS) used for a transmission frame with the highest priority given, a polling frame interval (PCF IFS or PIFS) used for a transmission frame with a relatively high priority, a distribution control frame interval (DCF IFS or DIFS) used for a transmission frame with the lowest priority, and the like. In a case that the base station apparatus transmits a data frame with the DCF, the base station apparatus uses the DIFS.

The base station apparatus waits by DIFS and then further waits for a random backoff time to prevent frame collision. In the IEEE 802.11 system, a random backoff time called a Contention window (CW) is used. CSMA/CA works with the assumption that a transmission frame transmitted by a certain transmitting station is received by a receiving station in a state in which there is no interference from other transmitting stations. Therefore, in a case that transmitting stations transmit transmission frames at the same timing, the frames collide against each other, and the receiving station cannot receive them properly. Thus, each transmitting station waits for a randomly configured time before starting transmission, and thus collision of frames can be avoided. In a case that the base station apparatus determines, through carrier sensing, that a radio channel is idle, the base station apparatus starts to count down CW, acquires a transmission right for the first time after CW becomes zero, and can transmit the transmission frame to the terminal apparatus. Further, in a case that the base station apparatus determines through the carrier sensing that the radio channel is busy during the count-down of CW, the base station apparatus stops the count-down of CW. In addition, in a case that the radio channel is idle, then the base station apparatus restarts the count-down of the remaining CW after the previous IFS.

Next, details of frame reception will be described. A terminal apparatus that is a receiving station receives a transmission frame, interprets the PHY header of the transmission frame, and demodulates the received transmission frame. Then, the terminal apparatus interprets the MAC header of the demodulated signal and thus can recognize whether the transmission frame is addressed to the terminal apparatus itself. Further, the terminal apparatus can also determine the destination of the transmission frame based on information described in the PHY header (for example, a Group identifier (Group ID or GID) listed in VHT-SIG-A).

In a case that the terminal apparatus determines that the received transmission frame is addressed to the terminal apparatus and has been able to demodulate the transmission frame without any error, the terminal apparatus has to transmit an ACK frame indicating that the frame has been properly received to the base station apparatus that is the transmitting station. The ACK frame is one of transmission frames with the highest priority transmitted only after a wait for the SIFS period (with no random backoff time). The base station apparatus ends the series of communication with the reception of the ACK frame transmitted from the terminal apparatus. Further, in a case that the terminal apparatus is not able to receive the frame properly, the terminal apparatus does not transmit ACK. Thus, in a case that the ACK frame has not been received from the receiving station for a certain period (a length of SIFS + ACK frame) after the transmission of the frame, the base station apparatus assumes that the communication has failed and ends the communication. In this manner, an end of a single communication operation (also called a burst) in the IEEE 802.11 system must be determined based on whether an ACK frame has been received except for special cases such as a case of transmission of a broadcast signal such as a beacon frame, a case that fragmentation for splitting transmission data is used, or the like.

In a case that the terminal apparatus determines that the received transmission frame is not addressed to the terminal apparatus itself, the terminal apparatus configures a Network allocation vector (NAV) based on the length of the transmission frame described in the PHY header or the like. The terminal apparatus does not attempt communication during the period configured in the NAV. In other words, because the terminal apparatus performs the same operation as in the case that the terminal apparatus determines the radio channel is busy through physical CS for the period configured in the NAV, the communication control based on the NAV is also called virtual carrier sensing (virtual CS). The NAV is also configured by a Request to send (RTS) frame or a Clear to send (CTS) frame, which are introduced to solve a hidden terminal problem in addition to the case that the NAV is configured based on the information described in the PHY header.

Unlike the DCF in which each apparatus performs carrier sensing and autonomously acquires the transmission right, with respect to the PCF, a control station called a Point coordinator (PC) controls the transmission right of each apparatus within a BSS. In general, the base station apparatus serves as a PC and acquires the transmission right of the terminal apparatus within a BSS.

A communication period using the PCF includes a Contention-free period (CFP) and a Contention period (CP). Communication is performed based on the aforementioned DCF during a CP, and a PC controls the transmission right during a CFP. The base station apparatus serving as a PC broadcasts a beacon frame with description of a CFP period (CFP Max duration) and the like in a BSS prior to communication with a PCF. Further, the PIFS is used for transmission of the beacon frame broadcast at the time of a start of transmission by the PCF, and the beacon frame is transmitted without waiting for CW. Further, the terminal apparatus that has received the beacon frame configures the CFP period described in the beacon frame in an NAV. Hereinafter, the terminal apparatus can acquire the transmission right only in a case that a signal (e.g., a data frame including CF-poll) for broadcasting the acquisition of the transmission right transmitted by the PC is received until the NAV elapses or a signal (e.g., a data frame including CF-end) broadcasting the end of the CFP in the BSS is received. Note that because no frame collision occurs inside the same BSS during the CFP period, each terminal apparatus does not take a random backoff time used in the DCF.

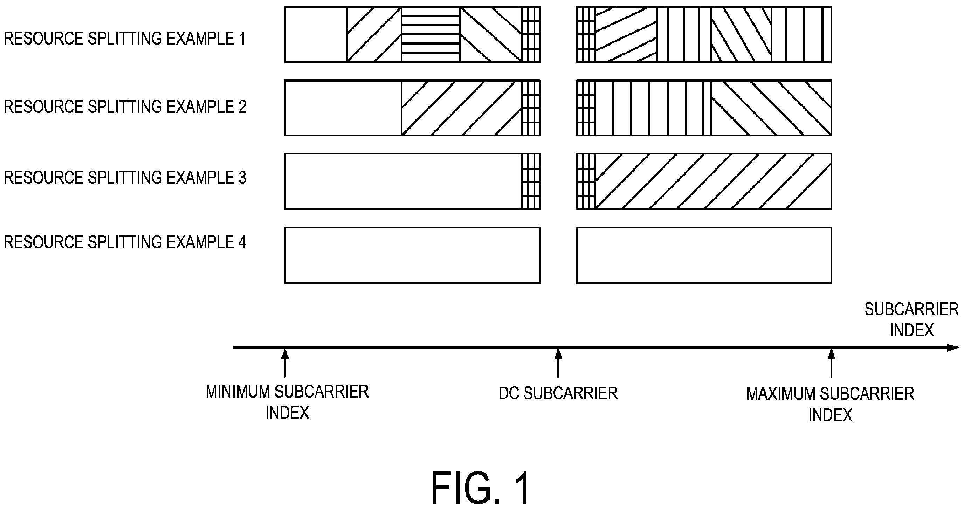

A radio medium can be split into multiple Resource units (RUs). FIG. 1 is a schematic diagram illustrating an example of split states of the radio medium. In the resource splitting example 1, for example, the radio communication apparatus can split a frequency resource (subcarrier) that is a radio medium into nine RUs. Similarly, in a resource splitting example 2, the radio communication apparatus can split a subcarrier that is a radio medium into five RUs. It is a matter of course that the resource splitting example illustrated in FIG. 1 is just an example, and for example, each of the multiple RUs can include a different number of subcarriers. Moreover, the radio medium that is split into RUs can include not only a frequency resource but also a spatial resource. The radio communication apparatus (an access point apparatus, for example) can transmit frames to multiple terminal apparatuses (multiple station apparatuses, for example) at the same time by disposing the different frames directed to the terminal apparatuses in the RUs. The access point apparatus can describe information (Resource allocation information) indicating the split state of the radio medium as common control information in the PHY header of the frame transmitted by the access point apparatus. Moreover, the access point apparatus can describe information (resource unit assignment information) indicating an RU where a frame directed to each station apparatus is disposed as unique control information in the PHY header of the frame transmitted by the access point apparatus.

Also, multiple terminal apparatuses (multiple station apparatuses, for example) can transmit frames at the same time by transmitting the frames disposed in the RUs allocated to themselves, respectively. The multiple station apparatuses can perform frame transmission after waiting for a prescribed period after receiving the frame (Trigger frame: TF) including trigger information transmitted from the access point apparatus. Each station apparatus can recognize the RU allocated to the station apparatus based on the information described in the TF. Also, each station apparatus can acquire the RU through a random access with reference to the TF.

The access point apparatus can allocate multiple RUs to one station apparatus at the same time. The multiple RUs can include continuous subcarriers or can include discontinuous subcarriers. The access point apparatus can transmit one frame using multiple RUs allocated to one station apparatus or can transmit multiple frames with the frames allocated to different RUs. At least one of the multiple frames can be a frame including common control information for transmitting Resource allocation information to multiple station apparatuses.

One station apparatus can be allocated multiple RUs by the access point apparatus. The station apparatus can transmit one frame using the multiple allocated RUs. Also, the station apparatus can use the multiple allocated RUs to perform transmission with multiple frames allocated to mutually different RUs. The multiple frames can be frames of different types.

The access point apparatus can also allocate multiple AIDs to one station apparatus. The access point apparatus can allocate an RU to each of the multiple AIDs allocated to the one station apparatus. The access point apparatus can transmit mutual different frames using the RUs allocated to the multiple AIDs allocated to the one station apparatus. The different frames can be frames of different types.

The one station apparatus can also be allocated multiple AIDs by the access point apparatus. The one station apparatus can be allocated an RU to each of the multiple AIDs allocated to the one station apparatus. The one station apparatus recognizes each of the RUs allocated to the corresponding one of the multiple AIDs allocated to the one station apparatus as RUs allocated to the one station apparatus and can transmit one frame using the multiple allocated RUs. Also, the one station apparatus can transmit multiple frames using the multiple allocated RUs. At this time, the multiple frames can be transmitted with information indicating the AIDs associated with each of the allocated RUs described therein. One station apparatus can transmit mutual different frames to the multiple AIDs allocated, using the RUs allocated. The different frames can be frames of different types.

In the following, information exchanged in a case that a certain radio communication apparatus performs communication with another radio communication apparatus will also be referred to as data.

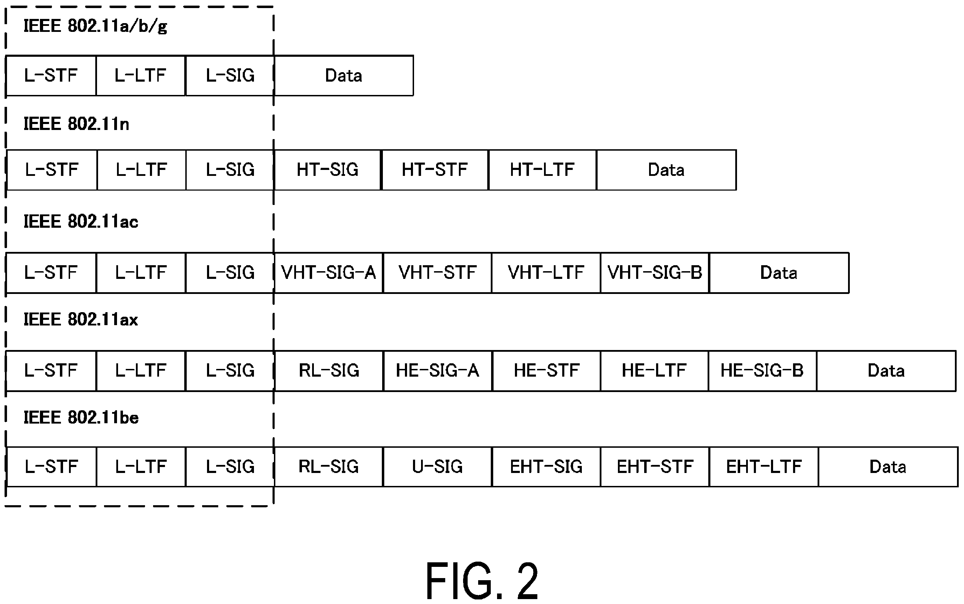

A radio communication apparatus includes any one of or both the function of transmitting a PPDU and a function of receiving a PPDU. FIG. 2 is a diagram illustrating an example of a configuration of the PPDU transmitted by the radio communication apparatus. A PPDU that is compliant with the IEEE 802.11a/b/g standard includes L-STF, L-LTF, L-SIG, and a data frame (a MAC frame, a MAC Frame, a payload, a data part, data, information bits, and the like). A PPDU that is compliant with the IEEE 802.11n standard includes L-STF, L-LTF, L-SIG, HT-SIG, HT-STF, HT-LTF, and a data frame. A PPDU that is compliant with the IEEE 802.11ac standard includes some or all of L-STF, L-LTF, L-SIG, VHT-SIG-A, VHT-STF, VHT-LTF, VHT-SIG-B, and a Data frame. The PPDU in the IEEE 802.1 1ax standard includes some or all of L-STF, L-LTF, L-SIG, RL-SIG in which L-SIG is temporally repeated, HE-SIG-A, HE-STF, HE-LTF, HE-SIG-B, and a Data frame. The PPDU studied in the IEEE 802.11be standard includes some or all of L-STF, L-LTF, L-SIG, RL-SIG, U-SIG, EHT-SIG, EHT-STF, EHT-LTF, and a Data frame.

L-STF, L-LTF, and L-SIG surrounded by the dotted line in FIG. 2 are configurations commonly used in the IEEE 802.11 standard (hereinafter, L-STF, L-LTF, and L-SIG will also be collectively referred to as an L-header). For example, a radio communication apparatus that is compliant with the IEEE 802.1 1a/b/g standard can appropriately receive an L-header inside a PPDU that is compliant with the IEEE 802.11n/ac/ax/be standard. A radio communication apparatus that is compliant with the IEEE 802.1 1a/b/g standard can receive the PPDU that is compliant with the IEEE 802.1 1n/ac/ax/be standard while considering it to be a PPDU that is compliant with the IEEE 802.11a/b/g standard.

However, because the radio communication apparatus that is compliant with the IEEE 802.1 1a/b/g standard cannot demodulate the PPDU that is compliant with the IEEE 802.1 1n/ac/ax/be standard following the L-header, it is not possible to demodulate information about a transmitter address (TA), a receiver address (RA), and a duration/ID field used for configuring an NAV.

As a method for the radio communication apparatus that is compliant with the IEEE 802.11a/b/g standard to appropriately configure the NAV (or perform a receiving operation for a prescribed period), IEEE 802.11 defines a method of inserting Duration information to the L-SIG. Information about a transmission speed in the L-SIG (a RATE field, an L_RATE field, an L_RATE, an L_DATARATE, and an L_DATARATE field) and information about a transmission period (a LENGTH field, an L_LENGTH field, and an L_LENGTH) are used by the radio communication apparatus that is compliant with the IEEE 802.1 1a/b/g standard to appropriately configure an NAV.

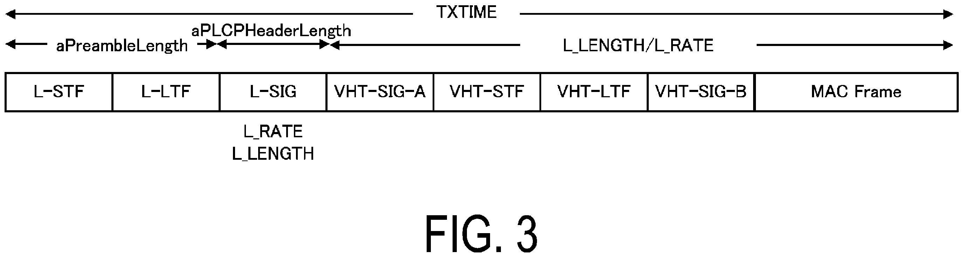

FIG. 3 is a diagram illustrating an example of a method of Duration information inserted into L-SIG. Although a PPDU configuration that is compliant with the IEEE 802.11ac standard is illustrated as an example in FIG. 3, the PPDU configuration is not limited thereto. A PPDU configuration that is compliant with the IEEE 802.11n standard and a PPDU configuration that is compliant with the IEEE 802.11ax standard may be employed. TXTIME includes information about a length of a PPDU, aPreambleLength includes information about a length of a preamble (L-STF + L-LTF), and aPLCPHeaderLength includes information about a length of a PLCP header (L-SIG). L_LENGTH is calculated based on Signal Extension that is a virtual period configured for compatibility with the IEEE 802.11 standard, $N_{ops}$ related to L_RATE, aSymbolLength that is information about one symbol (a symbol, an OFDM symbol, or the like), aPLCPServiceLength indicating the number of bits included in PLCP Service field, and aPLCPConvolutionalTailLength indicating the number of tail bits of a convolution code. The radio communication apparatus can calculate L_LENGTH and insert L_LENGTH into L-SIG. In addition, the radio communication apparatus can calculate L-SIG Duration. L-SIG Duration indicates information about a PPDU including L_LENGTH and information about a period that is the sum of periods of Ack and SIFS expected to be transmitted by the destination radio communication apparatus in response to the PPDU.

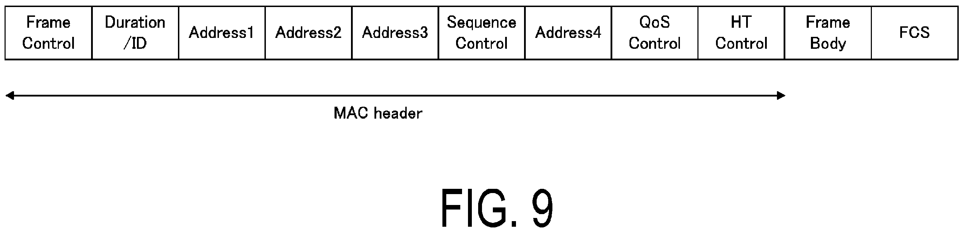

FIG. 9 illustrates an example of a MAC Frame format. The MAC Frame described herein indicates a Data frame in FIG. 2 (a MAC Frame, a MAC frame, a payload, a data unit, data, an information bit, and the like) and a MAC Frame in FIG. 3. The MAC Frame includes a Frame Control, a Duration/ID, an Address 1, an Address 2, an Address 3, a Sequence Control, an Address 4, a QoS Control, an HT Control, a Frame Body, and an FCS.

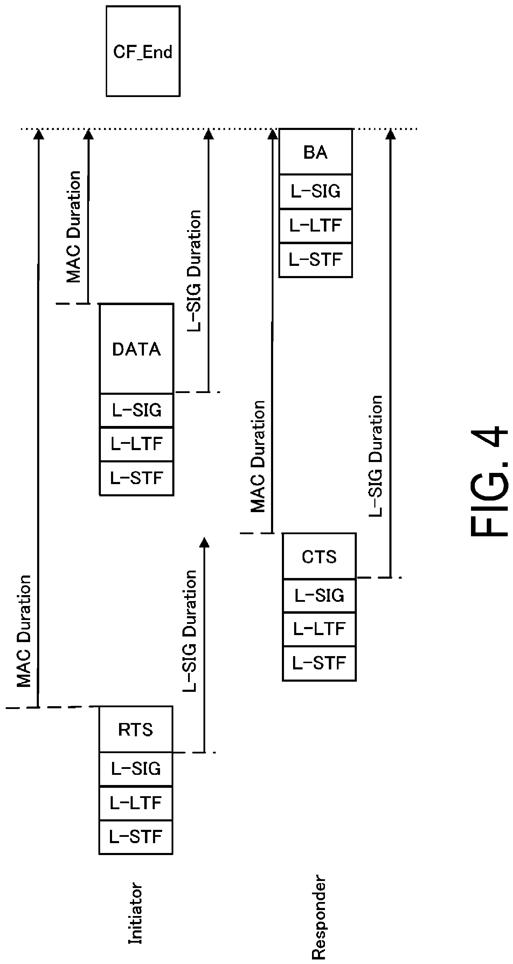

FIG. 4 is a diagram illustrating an example of L-SIG Duration in L-SIG TXOP Protection. DATA (a frame, a payload, data, and the like) include some of or both the MAC frame and the PLCP header. In addition, BA includes Block Ack or Ack. A PPDU includes L-STF, L-LTF, and L-SIG and can further include any one or more of DATA, BA, RTS, or CTS. Although L-SIG TXOP Protection using RTS/CTS is illustrated in the example illustrated in FIG. 4, CTS-to-Self may be used. Here, MAC Duration is a period indicated by a value of Duration/ID field. Furthermore, Initiator can transmit a CF_End frame for providing a notification regarding an end of the L-SIG TXOP Protection period.

Next, a method of identifying a BSS from a frame received by a radio communication apparatus will be described. In order for the radio communication apparatus to identify the BSS from the received frame, the radio communication apparatus that transmits a PPDU preferably inserts information (BSS Color, BSS identification information, a value unique to the BSS) for identifying the BSS into the PPDU, and it is possible to describe information indicating BSS Color in HE-SIG-A.

The radio communication apparatus can transmit L-SIG multiple times (L-SIG Repetition). For example, demodulation accuracy of L-SIG is improved by the radio communication apparatus on the reception side receiving L-SIG transmitted multiple times by using Maximum Ratio Combining (MRC). Moreover, in a case that reception of L-SIG has been properly completed using MRC, the radio communication apparatus can interpret the PPDU including the L-SIG as a PPDU that is compliant with the IEEE 802.11ax standard.

Even during the operation of receiving the PPDU, the radio communication apparatus can perform an operation of receiving part of a PPDU other than the corresponding PPDU (e.g., the preamble, L-STF, L-LTF, and the PLCP header prescribed by IEEE 802.11) (also referred to as a double-reception operation). In a case that a part of a PPDU other than the PPDU is detected during the operation of receiving the PPDU, the radio communication apparatus can update a part or an entirety of information about a destination address, a transmission source address, a PPDU, or a DATA period.

An ACK and a BA can also be referred to as a response (response frame). In addition, a probe response, an authentication response, and a connection response can also be referred to as a response.

1. First Embodiment

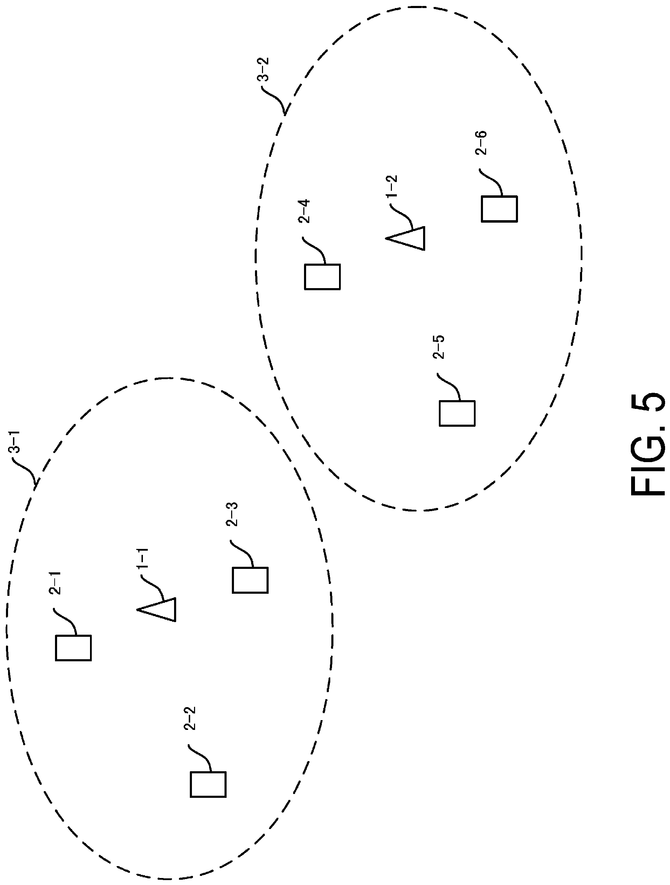

FIG. 5 is a diagram illustrating an example of a radio communication system according to the present embodiment. A radio communication system 3-1 includes a radio communication apparatus 1-1 and radio communication apparatuses 2-1 to 2-3. Note that the radio communication apparatus 1-1 will also be referred to as a base station apparatus 1-1, and the radio communication apparatuses 2-1 to 2-3 will also be referred to as terminal apparatuses 2-1 to 2-3. In addition, the radio communication apparatuses 2-1 to 2-3 and the terminal apparatuses 2-1 to 2-3 will also be referred to as a radio communication apparatus 2A and a terminal apparatus 2A, respectively, as apparatuses associated to the radio communication apparatus 1-1. The radio communication apparatus 1-1 and the radio communication apparatus 2A are wirelessly connected and are in a state in which they can transmit and/or receive PPDUs to and from each other. Also, the radio communication system according to the present embodiment may include a radio communication system 3-2 in addition to the radio communication system 3-1. The radio communication system 3-2 includes a radio communication apparatus 1-2 and radio communication apparatuses 2-4 to 2-6. Note that the radio communication apparatus 1-2 will also be referred to as a base station apparatus 1-2 and the radio communication apparatuses 2-4 to 2-6 will also be referred to as terminal apparatuses 2-4 to 2-6. Also, the radio communication apparatuses 2-4 to 2-6 and the terminal apparatuses 2-4 to 2-6 will also be referred to as a radio communication apparatus 2B and a terminal apparatus 2B, respectively, as apparatuses associated to the radio communication apparatus 1-2. Although the radio communication system 3-1 and the radio communication system 3-2 form different BSSs, this does not necessarily mean that extended service sets (ESSs) are different. An ESS indicates a service set forming a Local Area Network (LAN). In other words, radio communication apparatuses belonging to the same ESS can be regarded as belonging to the same network from an upper layer. Also, the BSSs are connected via a Distribution System (DS) and form an ESS. Note that each of the radio communication systems 3-1 and 3-2 can further include multiple radio communication apparatuses.

In FIG. 5, it is assumed that signals transmitted by the radio communication apparatus 2A reach the radio communication apparatus 1-1 and the radio communication apparatus 2B while the signals do not reach the radio communication apparatus 1-2 in the following description. In other words, in a case that the radio communication apparatus 2A transmits a signal using a certain channel, whereas the radio communication apparatus 1-1 and the radio communication apparatus 2B determine that the channel is busy, the radio communication apparatus 1-2 determines that the channel is idle. In addition, it is assumed that signals transmitted by the radio communication apparatus 2B arrive at the radio communication apparatus 1-2 and the radio communication apparatus 2A, but do not arrive at the radio communication apparatus 1-1. In other words, in a case that the radio communication apparatus 2B transmits a signal using a certain channel, whereas the radio communication apparatus 1-2 and the radio communication apparatus 2A determine that the channel is busy, the radio communication apparatus 1-1 determines that the channel is idle.

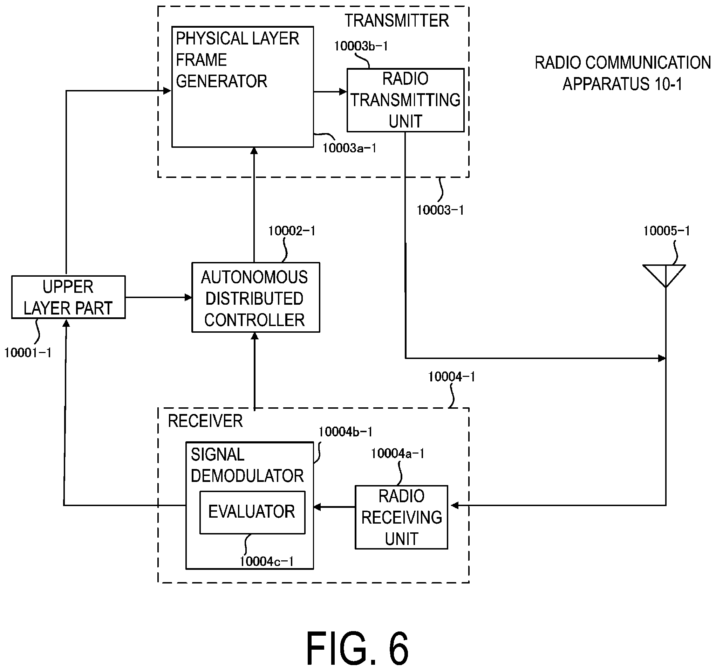

FIG. 6 is a diagram illustrating an example of an apparatus configuration of the radio communication apparatuses 1-1, 1-2, 2A, and 2B (hereinafter, collectively referred to as a radio communication apparatus 10-1 or a station apparatus 10-1 or also simply referred to as a station apparatus). The radio communication apparatus 10-1 includes an upper layer part (upper layer processing step) 10001-1, an autonomous distributed controller (autonomous distributed control step) 10002-1, a transmitter (transmission step) 10003-1, a receiver (reception step) 10004-1, and an antenna 10005-1.

The upper layer part 10001-1 performs information processing for upper layers of the physical layer, for example, the MAC layer and the LLC layer in regard to information (information related to a transmission frame, a Management Information Base (MIB), and the like) handled in the radio communication apparatus and a frame received from another radio communication apparatus.

The upper layer part 10001-1 can notify the autonomous distributed controller 10002-1 of information related to a frame and a traffic transmitted to a radio medium. The information related to a frame and a traffic may be control information included in a management frame such as a beacon, for example, or may be measurement information reported by another radio communication apparatus to the radio communication apparatus. Moreover, the information may be control information included in a management frame or a control frame with the destination not limited (the information may be directed to the apparatus, may be directed to another apparatus, may be broadcasting, or may be multicasting).

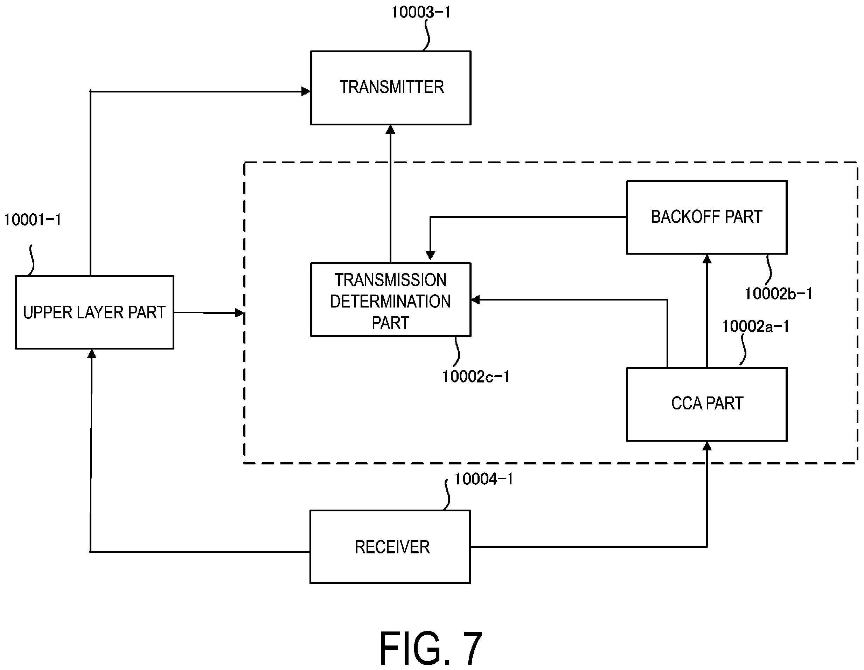

FIG. 7 is a diagram illustrating an example of an apparatus configuration of the autonomous distributed controller 10002-1. The autonomous distributed controller 10002-1 will also be referred to as a controller 10002-1 and includes a CCA part (CCA step) 10002a-1, a backoff processor (backoff step) 10002b-1, and a transmission determiner (transmission determination step) 10002c-1.

The CCA part 10002a-1 can perform determination of a state of a radio resource (including determination between a busy state and an idle state) using any one of or both information related to reception signal power received via the radio resource and information related to the reception signal (including information after decoding) provided as a notification from the receiver 10004-1. The CCA part 10002a-1 can notify the backoff part 10002b-1 and the transmission determination part 10002c-1 of the state determination information of the radio resources.

The backoff part 10002b-1 can perform backoff using the state determination information of the radio resources. The backoff part 10002b-1 has a function of generating a CW and counting down it. For example, it is possible to perform counting-down of CW in a case that the state determination information of the radio resource indicates an idle state, for example, and it is possible to stop the counting-down of CW in a case that the state determination information of the radio resource indicates a busy state. The backoff part 10002b-1 can notify the transmission determination part 10002c-1 of the value of the CW.

The transmission determination part 10002c-1 performs transmission determination using any one of or both the state determination information of the radio resources and the value of the CW. For example, the transmitter 10003-1 can be notified of transmission determination information in a case that the state determination information of the radio resources indicates idle and the value of the CW is zero. In addition, the transmitter 10003-1 can be notified of the transmission determination information in a case that the state determination information of the radio resources indicates idle.

The transmitter 10003-1 includes a physical layer frame generator (physical layer frame generation step) 10003a-1 and a radio transmitting unit (radio transmission step) 10003b-1. Note that the physical layer frame generator (physical layer frame generation step) may be referred to as a frame generator (frame generation step). The physical layer frame generator 10003a-1 includes a function of generating a physical layer frame (hereinafter, also referred to as a frame or a PPDU) based on the transmission determination information provided as a notification from the transmission determiner 10002c-1. The physical layer frame generator 10003a-1 includes a coder that performs error correction coding processing on data received from the upper layer and generates a coding block. Also, the physical layer frame generator 10003a-1 also includes a function of performing modulation, precoding filter multiplication, and the like. The physical layer frame generator 10003a-1 sends the generated physical layer frame to the radio transmitter 10003b-1.

In addition, the frame generated by the physical layer frame generator 10003a-1 includes a trigger frame for indicating frame transmission to the radio communication apparatus that is a destination terminal. The trigger frame includes information indicating the RU to be used by the radio communication apparatus that has received the indication for the frame transmission to transmit the frame.

The radio transmitting unit 10003b-1 converts the physical layer frame generated by the physical layer frame generator 10003a-1 into a signal in a Radio Frequency (RF) band to generate a radio frequency signal. Processing performed by the radio transmitting unit 10003b-1 includes digital-to-analog conversion, filtering, frequency conversion from a baseband to an RF band, and the like.

The receiver 10004-1 includes a radio receiving unit (radio reception step) 10004a-1 and a signal demodulator (signal demodulation step) 10004b-1. The receiver 10004-1 generates information about reception signal power from a signal in the RF band received by the antenna 10005-1. The receiver 10004-1 can notify the CCA part 10002a-1 of the information about the reception signal power and the information about the reception signal.

The radio receiving unit 10004a-1 has a function of converting a signal in the RF band received by the antenna 10005-1 into a baseband signal and generating a physical layer signal (e.g., a physical layer frame). Processing performed by the radio receiving unit 10004a-1 includes frequency conversion processing from the RF band to the baseband, filtering, and analog-to-digital conversion.

The signal demodulator 10004b-1 has a function of demodulating a physical layer signal generated by the radio receiving unit 10004a-1. Processing performed by the signal demodulator 10004b-1 includes channel equalization, demapping, error correction decoding, and the like. The signal demodulator 10004b-1 can extract, from the physical layer signal, information included in the PHY header, information included in the MAC header, and information included in the transmission frame, for example. The signal demodulator 10004b-1 can notify the upper layer part 10001-1 of the extracted information. Note that the signal demodulator 10004b-1 can extract any one or all of information included in the PHY header, information included in the MAC header, and information included in the transmission frame. An evaluator (evaluation step) 10004c-1 performs prescribed operation on the thus extracted information included in the PHY header, the MAC header and the like and notifies the upper layer part of detail in accordance with the evaluation.

The antenna 10005-1 includes a function of transmitting the radio frequency signal generated by the radio transmitter 10003b-1 to a radio space. Also, the antenna 10005-1 includes a function of receiving the radio frequency signal and passing the radio frequency signal to the radio receiving unit 10004a-1.

The radio communication apparatus 10-1 can cause radio communication apparatuses in the surroundings of the radio communication apparatus 10-1 to configure NAV corresponding to a period during which the radio communication apparatus uses a radio medium by describing information indicating the period in the PHY header or the MAC header of the frame to be transmitted. For example, the radio communication apparatus 10-1 can describe the information indicating the period in a Duration/ID field or a LENGTH field of the frame to be transmitted. The NAV period configured to radio communication apparatuses in the surroundings of the radio communication apparatus will be referred to as a TXOP period (or simply TXOP) acquired by the radio communication apparatus 10-1. In addition, the radio communication apparatus 10-1 that has acquired the TXOP will be referred to as a TXOP acquirer (TXOP holder). The type of frame to be transmitted by the radio communication apparatus 10-1 to acquire TXOP is not limited to any frame type, and the frame may be a control frame (e.g., an RTS frame or a CTS-to-self frame) or may be a data frame.

The radio communication apparatus 10-1 that is a TXOP holder can transmit the frame to radio communication apparatuses other than the radio communication apparatus during the TXOP. In a case that the radio communication apparatus 1-1 is a TXOP holder, the radio communication apparatus 1-1 can transmit a frame to the radio communication apparatus 2A during the TXOP period. In addition, the radio communication apparatus 1-1 can indicate to the radio communication apparatus 2A to transmit a frame addressed to the radio communication apparatus 1-1 during the TXOP period. The radio communication apparatus 1-1 can transmit, to the radio communication apparatus 2A, a trigger frame including information for indicating a frame transmission addressed to the radio communication apparatus 1-1 during the TXOP period.

The radio communication apparatus 1-1 may obtain a TXOP for the entire communication band (e.g., Operation bandwidth) in which frame transmission is likely to be performed, or may obtain a TXOP for a specific communication band (Band) such as a communication band in which frames are actually transmitted (e.g., Transmission bandwidth).

The radio communication apparatus that provides an indication for transmitting a frame in the TXOP period acquired by the radio communication apparatus 1-1 is not necessarily limited to radio communication apparatuses associated to the radio communication apparatus. For example, the radio communication apparatus can provide an indication for transmitting frames to radio communication apparatuses that are not associated to the radio communication apparatus in order to cause the radio communication apparatuses in the surroundings of the radio communication apparatus to transmit management frames such as a Reassociation frame or control frames such as an RTS/CTS frame.

Furthermore, TXOP in EDCA that is a data transmission method different from DCF will also be described. The IEEE 802.11e standard relates to EDCA and defines TXOP in terms of guaranty of Quality of Service (QoS) for various services such as video transmission and Voice over IP (VoIP). The services are roughly classified into four access categories, namely VOice (VO), VIdeo (VI), Best Effort (BE), and BacK ground (BK). In general, the services include VO, VI, BE, and BK with higher priority in this order. In each access category, there are parameters including a minimum value CWmin of CW, a maximum value CWmax of CW, Arbitration IFS (AIFS) as a type of IFS, and TXOP limit that is an upper limit value of a transmission opportunity, and values are set to have differences in priority. For example, it is possible to perform data transmission prioritized over the other access categories by setting a relatively small value for CWmin, CWmax, and AIFS of VO with the highest priority for the purpose of voice transmission as compared with the other access categories. For example, in a case of VI with a relatively large amount of transmission data to transmit a video, it is possible to extend a transmission opportunity as compared with the other access categories by configuring TXOP limit to be large. In this manner, four parameter values of the access categories are adjusted for the purpose of guaranteeing QoS in accordance with various services.

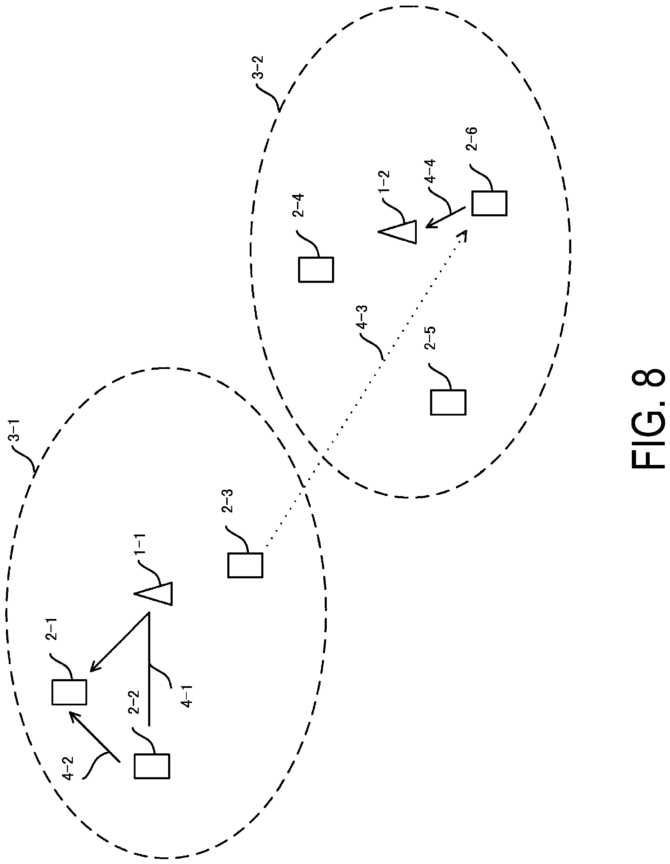

Next, with reference to FIG. 8, an example of implementation of a direct link will be described. Among the reference signs used in FIG. 8, description for the reference signs the same as those in FIG. 5 are similar to those described in FIG. 5. A radio system 3-1 includes a base station apparatus 1-1, a terminal apparatus 2-1 (radio communication apparatus 2-1), a terminal apparatus 2-2 (radio communication apparatus 2-2), and a terminal apparatus 2-3 (radio communication apparatus 2-3). In a case that the terminal apparatus 2-2 transmits data to the terminal apparatus 2-1, a direct link refers to performing direct link (4-2) from the terminal apparatus 2-2 to the terminal apparatus 2-1 without passing through the base station apparatus 1-1 and communication (4-1) via the base station apparatus 1-1. In a case that the direct link is used, the terminal apparatus 2-1 transmits a direct link discovery request to the terminal apparatus 2-2 via the base station apparatus 1-1. The terminal apparatus 2-2 that has received the direct link discovery request via the base station apparatus 1-1 transmits a direct link discovery response to the terminal apparatus 2-1, using a direct path. In a case that the terminal apparatus 2-1 succeeds in receiving the direct link discovery response, it can be determined that the direct link can be performed between the terminal apparatus 2-1 and the terminal apparatus 2-2.

Subsequently, the terminal apparatus 2-1 transmits a direct link setup request to the terminal apparatus 2-2 via the base station apparatus 1-1. The terminal apparatus 2-1 that transmits the direct link setup request may be referred to as an initiator. The terminal apparatus 2-2 that has received the direct link setup request transmits a direct setup response to the terminal apparatus 2-1 via the base station apparatus 1-1. The terminal apparatus 2-2 that transmits the direct setup response may be referred to as a responder. After these direct link setup request and direct link setup response are exchanged successfully, it is considered that the direct link has been established, and the terminal apparatus 2-1 and the terminal apparatus 2-2 can perform the direct link with each other without using the base station apparatus 1-1 in a case of communicating with each other. The direct link setup request and the direct link setup response may include various pieces of control information, of which examples include pieces of control information such as information used in encryption communication, e.g., information related to a key and the like. In a case that pieces of information used in encryption communication are exchanged on the occasion of the exchange of the direct link setup request and the direct link setup response, encryption may be used in the direct link.

Next, with reference to FIG. 8, inter-BSS spatial reuse operation will be described. Even in a case that an interference signal is added to a desired signal in radio communication, the desired signal can be demodulated and decoded, on the condition that a ratio between power of noise and the interference signal and power of the desired signal is equal to or more than a certain value. This means that, in a case that communication is performed at a distance, in other words, in a case that there is a sufficient distance from the terminal apparatus with which the communication is performed, communication between multiple terminal apparatuses located at relatively small distances can be simultaneously performed with the distant communication. Such transmission operation with reuse of the radio medium using a difference of path loss occurring depending on a deployment state of the terminal apparatuses as described above is referred to as Spatial Reuse operation. Spatial Reuse operation may be hereinafter simply shortened to as SR.

As an example, the following will describe a case that the radio communication apparatus 2-6 in the radio system 3-2 performs simultaneous transmission using SR for the signal that the terminal apparatus 2-3 transmits to the base station apparatus 1-1 in the radio system 3-1. In this case, whether transmission using SR can be performed without a problem depends on to what degree a Signal to Interference Noise Ratio (SINR) of the signal of the terminal apparatus 2-3 received in the base station apparatus 1-1 deteriorates due to transmission of the terminal apparatus 2-6. In a case that path loss from the terminal apparatus 2-6 to the base station apparatus 1-1 is sufficiently large and transmit power of the terminal apparatus 2-6 is sufficiently small, deterioration of the SINR of the signal of the terminal apparatus 2-3 received in the base station apparatus 1-1 is allowed. Various methods can be used as the method for ensuring path loss from the terminal apparatus 2-6 to the base station apparatus 1-1. As an example, in a case that the radio systems (BSSs) to which the terminal apparatuses belong are different from each other, it is assumed that sufficient path loss is ensured, and there is inter-BSS SR for performing SR. In a case that the terminal apparatus 2-6 in the radio system 3-2 receives a signal 4-3 transmitted by the terminal apparatus 2-3 in the radio system 3-1, the terminal apparatus 2-6 reads the PHY header of a radio frame of the signal 4-3, and determines from which radio system the signal 4-3 is transmitted. In this case, the terminal apparatus 2-6 may identify that the signal is a signal of a radio frame transmitted from a radio system different from the radio system 3-2 by using shortened information of an identifier indicating a radio system referred to as BSS Color being included in the PHY header.

After having identified that the signal 4-3 is a signal from a radio frame from another radio system, the terminal apparatus 2-6 may read a Network Allocation Vector (NAV) indicating transmission time of the signal 4-3 from the PHY header of the signal 4-3, prepare transmission data (radio frame) so that transmission completes before the time indicated by the NAV, and transmit the transmission data (radio frame) to the base station apparatus 1-2 (signal 4-4). At the time of transmission, the terminal apparatus 2-6 may control transmit power, in such a manner that interference with the base station apparatuses and the terminal apparatuses included in the radio system 3-1 is reduced. Information used for the transmit power may be received from the base station apparatus 1-2. The terminal apparatus 2-6 may perform transmit power control by using received power in a case that various LTFs included in the preamble of the signal 4-3 are received. The received power in a case that various LTFs included in the preamble of the signal 4-3 are received may be regarded as typical received power of the signal 4-3.

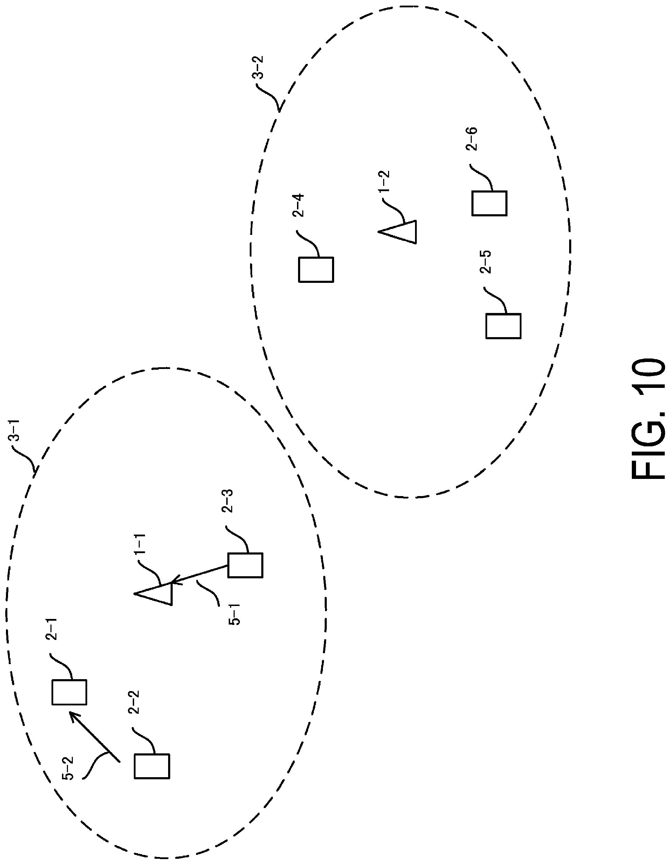

In the present embodiment, as a target for performing SR, communication within the same radio system is used (intra-BSS SR operation). An example of SR for direct link communication within the same radio system will be described with reference to FIG. 10. Among the reference signs used in FIG. 10, description for the reference signs the same as those in FIG. 5 are similar to those described in FIG. 5. The radio system 3-1 includes the base station apparatus 1-1 and the terminal apparatuses 2-1 to 2-3. It is assumed that the terminal apparatus 2-1 and the terminal apparatus 2-2 are already configured with the direct link. The terminal apparatus 2-3 performs transmission to the base station apparatus 1-1 (signal 5-1). The terminal apparatus 2-2 has data to be transmitted to the terminal apparatus 2-1, in other words, data that can be transmitted using the direct link, but suspends the transmission in a case of detecting the signal 5-1 through carrier sensing. After detecting the signal 5-1, the terminal apparatus 2-2 receives the PHY header of the signal 5-1. From the PHY header, the terminal apparatus 2-2 obtains duration information (NAV) indicating the length of the signal 5-1. Subsequently, the terminal apparatus 2-2 may perform configuration so that the length of the transmission data (length of the radio frame) does not exceed the NAV indicating the length of the signal 5-1 (length of the radio frame), configure transmit power, overlap on the signal 5-1, and then transmit the data (radio frame) to the terminal apparatus 2-1 (signal 5-2).

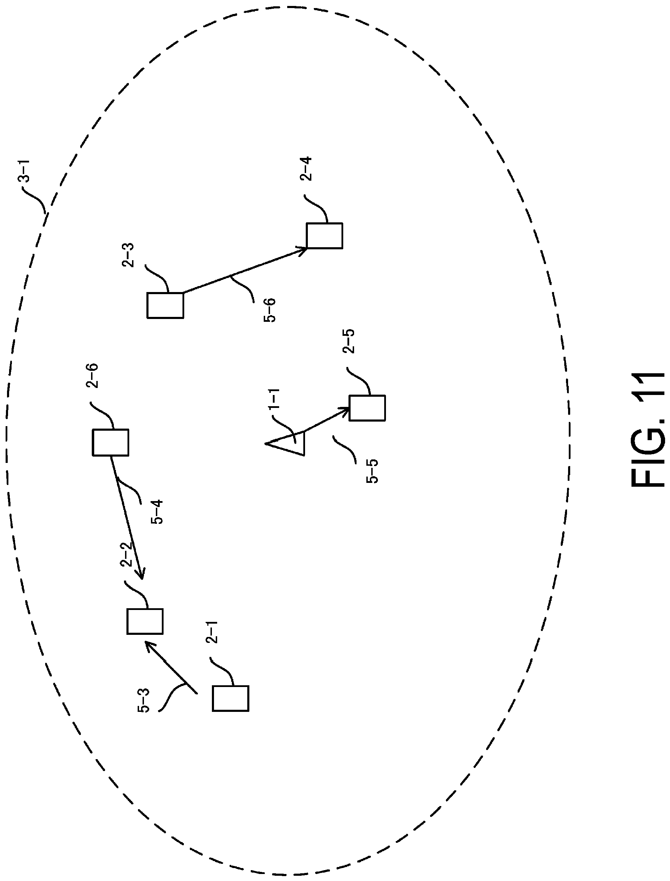

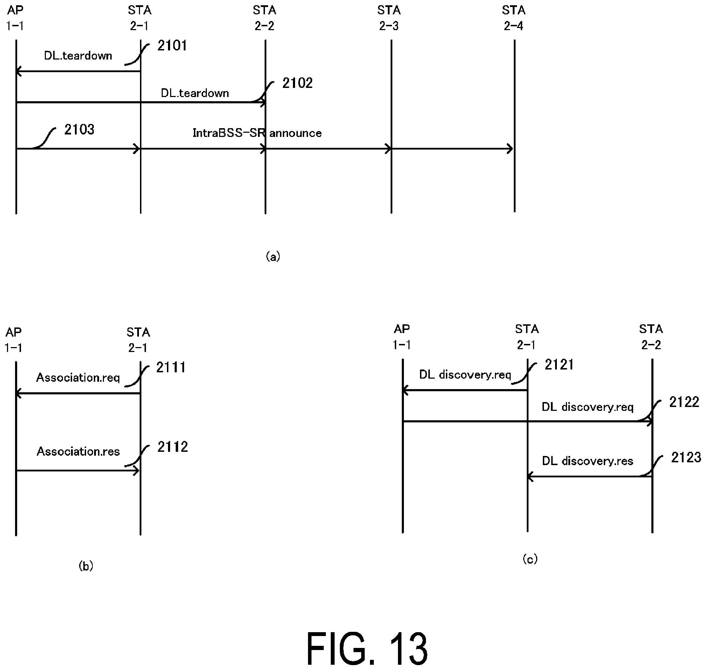

In the following, a procedure for performing SR will be described in detail with reference to the drawings. FIG. 11 illustrates an outline of a positional relationship of apparatuses. Among the reference signs used in FIG. 11, description for the reference signs the same as those in FIG. 5 are similar to those described in FIG. 5. The radio system 3-1 includes the base station apparatus 1-1 and the terminal apparatuses 2-1 to 2-5. It is assumed that the base station apparatus 1-1 and the terminal apparatuses 2-1 to 2-5 support SR using the direct link. In a case that the radio communication apparatuses 2-1 to 2-5 join the radio system 3-1, the radio communication apparatuses 2-1 to 2-5 transmit an association request to the base station apparatus 1-1, and receive an association response transmitted from the base station apparatus. A message flow in this case is illustrated in FIG. 13(b). In FIG. 13(b), as an example, the terminal apparatus 2-1 transmits the association request to the base station apparatus 1-1. 2111 denotes the association request transmitted from the terminal apparatus 2-1 to the base station apparatus 1-1, and 2112 denotes the association response transmitted from the base station apparatus 1-1 to the terminal apparatus 2-1. The association request includes capability information of the terminal apparatus 2-1, and the association response includes capability information of the base station apparatus 1-1. The base station apparatus 1-1 may perform notification of BSS Color used for identifying the BSS managed by the base station apparatus 1-1. The base station apparatus 1-1 may change the BSS Color, and notify the associated terminal apparatuses of the change.

In the present embodiment, information indicating support of intra-BSS SR is included in these pieces of capability information. As an example, it is assumed that methods of intra-BSS SR include two types, namely PD-based SR and PSR-based SR, and information indicating support or no support of each of PD-based SR and PSR-based SR is included in the capability information. From the capability information obtained from the base station apparatus 1-1, the terminal apparatus 2-1 can know whether the radio system 3-1 supports intra-BSS SR, and whether the radio system 3-1 supports each of PD-based SR and PSR-based SR in a case that the radio system 3-1 supports intra-BSS SR. The base station apparatus 1-1 can know whether the terminal apparatus 2-1 supports intra-BSS SR, and whether the terminal apparatus 2-1 supports each of PD-based SR and PSR-based SR in a case that the terminal apparatus 2-1 supports intra-BSS SR.

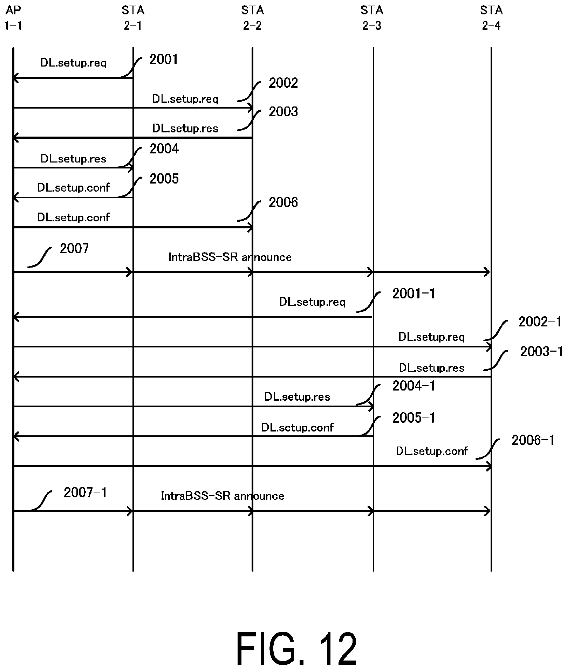

Next, an example of a flow in a case that the terminal apparatus configures direct link will be described with reference to FIG. 12. As an example, a flow of a case that the terminal apparatus 2-1 configures direct link for the terminal apparatus 2-2 and subsequently the terminal apparatus 2-3 configures direct link for the terminal apparatus 2-4 will be described. First, the terminal apparatus 2-1 transmits the direct link setup request to the terminal apparatus 2-2 via the base station apparatus 1-1. 2001 denotes the direct link setup request from the terminal apparatus 2-1 to the base station apparatus 1-1, and 2002 denotes the direct link setup request from the base station apparatus 1-1 to the terminal apparatus 2-2. The terminal apparatus 2-2 receives the direct link setup request transmitted from the terminal apparatus 2-1 via the base station apparatus 1-1, and then transmits the direct link setup response to the terminal apparatus 2-1 via the base station apparatus 1-1. 2003 denotes the direct link setup response from the terminal apparatus 2-2 to the base station apparatus 1-1, and 2004 denotes the direct link setup response from the base station apparatus 1-1 to the terminal apparatus 2-1. The terminal apparatus 2-1 receives the direct link setup response, and then transmits a direct link setup confirmation to the terminal apparatus 2-2 via the base station apparatus 1-1. 2005 denotes the direct link setup confirmation from the terminal apparatus 2-1 to the base station apparatus 1-1, and 2006 denotes the direct link setup confirmation from the base station apparatus to the terminal apparatus 2-2.

The terminal apparatus 2-1 may include information indicating whether the terminal apparatus 2-1 supports intra-BSS SR in the direct link setup request 2001. The information indicating whether the terminal apparatus 2-1 supports intra-BSS SR is transmitted to the terminal apparatus 2-2 via the base station apparatus 1-1. The terminal apparatus 2-2 may include information (capability information) indicating whether the terminal apparatus 2-2 supports intra-BSS SR in the direct link setup response 2003. The information indicating whether the terminal apparatus 2-2 supports intra-BSS SR is transmitted to the terminal apparatus 2-1 via the base station apparatus 1-1. The terminal apparatus 2-1 and the terminal apparatus 2-2 can determine which terminal, out of the base station apparatus 1-1, the terminal apparatus 2-1, and the terminal apparatus 2-2, supports intra-BSS SR, from the capability information and the capability information exchanged at the time of association. In a case of supporting intra-BSS SR, the terminal apparatus 2-1 and the terminal apparatus 2-2 can determine whether the terminal apparatus 2-1 and the terminal apparatus 2-2 support PD-based SR, support PSR-based SR, or support both of PD-based SR and PSR-based SR. The terminal apparatus 2-1 that has received the information indicating whether the terminal apparatus 2-2 supports intra-BSS SR transmits the direct link setup confirmation including information specifying one of the methods of intra-BSS SR supported by the terminal apparatus 2-1, the terminal apparatus 2-2, and the base station apparatus 1-1 to the terminal apparatus 2-2 via the base station apparatus 1-1. Through exchange of the direct link confirmation including the information specifying one of the methods of intra-BSS SR, direct transmission is configured between the terminal apparatus 2-1 and the terminal apparatus 2-2, and the base station apparatus 1-1 can know that direct transmission is configured between the terminal apparatus 2-1 and the terminal apparatus 2-2, and can know whether the direct link supports intra-BSS SR, supports intra-BSS SR by means of PD-base SR, and supports intra-BSS SR by means of PSR-based SR.

In a case that the base station apparatus 1-1 receives the direct link setup confirmation 2005, the base station apparatus 1-1 generates SR link information. The SR link information can include multiple pieces of information. As an example, the SR link information may include information indicating the terminal apparatus configuring direct link supporting intra-BSS SR, and information indicating a method of intra-BSS SR supported by direct link supporting intra-BSS SR. As an example, the SR link information generated after the direct link setup confirmation 2006 may include information indicating the terminal apparatus 2-1, information indicating the terminal apparatus 2-2, and a color index associated with the information indicating the terminal apparatus 2-1 and the information indicating the terminal apparatus 2-2. As the information indicating the terminal apparatus 2-1 and the information indicating the terminal apparatus 2-2, a MAC address of the terminal apparatus 2-1 and a MAC address of the terminal apparatus 2-2 may be used, respectively. An association ID (AID) of the terminal apparatus 2-1 and an AID of the terminal apparatus 2-2 may be used. Shortened information of the MAC address and the AID may be used. The color index is information for distinguishing between one or more configured direct links supporting intra-BSS SR. A total number of the color indexes may be less than a total number of all of the combinations of direct links that can be configured. As an example, 0 to 63 may be used, which can be expressed with a 6-bit length. In a case of a part of the color indexes, for example, a color index having a 6-bit length, 0 may be used as a value indicating direct link not supporting intra-BSS SR. In the present embodiment, 1 is configured as the color index corresponding to the direct link setup confirmation 2005. In a case that the SR link information is generated before receiving the direct link setup confirmation 2005, the generated SR link information may be updated with addition of the information indicating the terminal apparatus 2-1, the information indicating the terminal apparatus 2-2, and the color index associated with the information indicating the terminal apparatus 2-1 and the information indicating the terminal apparatus 2-2. The base station apparatus 1-1 transmits the generated or updated SR link information to one or more terminal apparatuses by means of broadcast communication, multicast communication, or unicast communication. In the present embodiment, the SR link information is included in intraBSS-SR announce information 2007, and the intraBSS-SR announce information 2007 is transmitted to the terminal apparatus 2-1, the terminal apparatus 2-2, the terminal apparatus 2-3, and the terminal apparatus 2-4 connected to the base station apparatus 1-1 by means of broadcast communication.

The terminal apparatus 2-1 and the terminal apparatus 2-2 that have received the intraBSS-SR announce information 2007 can know the color index (1) to be used for the direct link configured in the direct link setup confirmations 2005 and 2006, and the terminal apparatus 2-3 and the terminal apparatus 2-4 that have received the intraBSS-SR announce information 2007 can be configured with direct link supporting intra-BSS SR between the terminal apparatus 2-1 and the terminal apparatus 2-2 and know that the color index to be used for the direct link is 1.

In the present embodiment, the base station apparatus 1-1 performs notification of the color index configured on the intraBSS-SR announce information, but the base station apparatus 1-1 may include the color index in the direct link setup confirmation 2006 transmitted thereby. In this case, the terminal apparatus 2-1 may be notified of the color index corresponding to information of direct link configured between the terminal apparatus 2-1 and the terminal apparatus 2-2 by means of unicast communication.

Next, the terminal apparatus 2-3 configures direct link for the terminal apparatus 2-4. The messages used for configuration and the flow thereof are similar to those in a case that the terminal apparatus 2-1 configures direct link for the terminal apparatus 2-2. The terminal apparatus 2-3 transmits the direct link setup request to the terminal apparatus 2-4 via the base station apparatus. 2001-1 denotes the direct link setup request to the base station apparatus, and 2002-1 denotes the direct link setup request to the terminal apparatus 2-4. The terminal apparatus 2-4 that has received the direct link setup request 2002-1 transmits the direct link setup response to the terminal apparatus 2-3 via the base station apparatus 1-1. 2003-1 denotes the direct link setup response to the base station apparatus 1-1, and 2004-1 denotes the direct link setup response to the terminal apparatus 2-3. The terminal apparatus 2-3 that has received the direct link setup response 2004-1 transmits the direct link setup confirmation to the terminal apparatus 2-4 via the base station apparatus 1-1. 2005-1 denotes the direct link setup confirmation to the base station apparatus 1-1, and 2006-1 denotes the direct link setup confirmation to the terminal apparatus 2-4. Next, the base station apparatus 1-1 that has received the direct link setup confirmation 2005-1 transmits the intraBSS-SR announce information 2007-1 to the terminal apparatus 2-1, the terminal apparatus 2-2, the terminal apparatus 2-3, and the terminal apparatus 2-4 by means of broadcast communication. The direct link setup requests 2001-1 and 2002-1 may include capability information related to intra-BSS SR of the terminal apparatus 2-3. The direct link setup responses 2003-1 and 2004-1 may include capability information related to intra-BSS SR of the terminal apparatus 2-4. The direct link setup confirmations 2005-1 and 2006-1 may include information specifying one of the methods of intra-BSS SR supported by the terminal apparatus 2-3, the terminal apparatus 2-4, and the base station apparatus 1-1. The intraBSS-SR announce information 2007-1 may include updated SR link information, and in addition to the SR link information included in the intraBSS-SR announce information 2007, information indicating the terminal apparatus 2-3, information indicating the terminal apparatus 2-4, and a color index associated with the information indicating the terminal apparatus 2-3 and the information indicating the terminal apparatus 2-4 may be included. As an example, as the color index, 2 may be used. As a result, the updated SR link information may include the MAC address of the terminal apparatus 2-1, the MAC address of the terminal apparatus 2-2, the color index (1) associated with the MAC address of the terminal apparatus 2-1 and the MAC address of the terminal apparatus 2-2, the MAC address of the terminal apparatus 2-3, the MAC address of the terminal apparatus 2-4, and the color index (2) associated with the MAC address of the terminal apparatus 2-3 and the MAC address of the terminal apparatus 2-4.

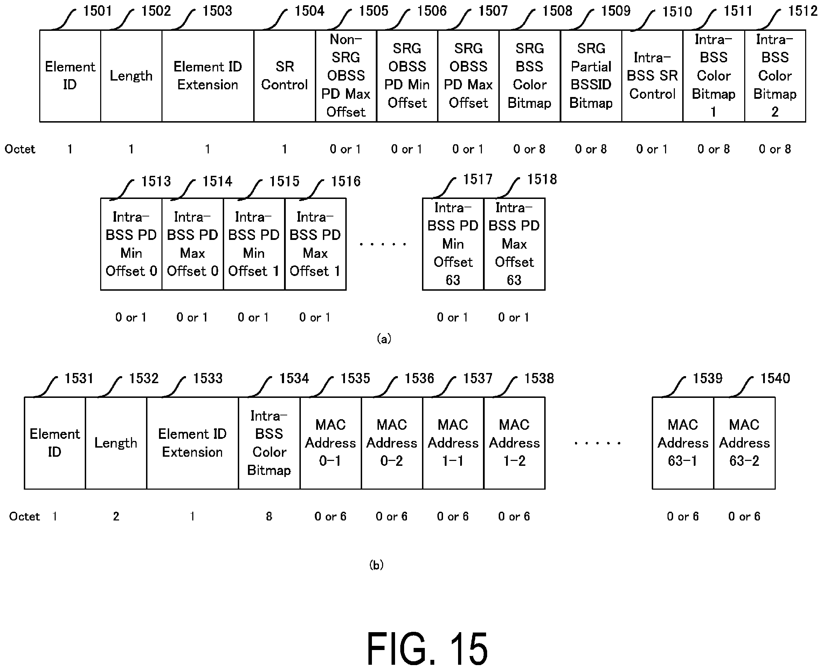

An example of a structure of an information element indicating the color index and the two terminal apparatuses associated with the color index is illustrated in FIG. 15(b). The information element is hereinafter referred to as a color index information element. 1531 is an element ID and 1533 is an element ID extension, and a type of the information element is identified using these two fields. 1532 is a length field indicating the length of the color index information element, and 1534 is an Intra-BSS Color Bitmap field indicating which color index is enabled, and each bit of 8 octets (= 64 bits) indicates which color index is used. The least significant bit corresponds to color index 0, and the most significant bit corresponds to color index 63. In a case that the value of the bit is 0, it is indicated that a corresponding color index is not used, and in a case that the value of the bit is 1, it is indicated that the corresponding color index is being used. The Intra-BSS Color Bitmap field 1534 is followed by MAC addresses of the terminal apparatuses corresponding to the color indexes being used. 1535 corresponds to color index 0 and denotes the MAC address of the terminal apparatus that has started configuration of direct link, 1536 corresponds to color index 0 and denotes the MAC address of the terminal apparatus that has responded to configuration of direct link, 1537 corresponds to color index 1 and denotes the MAC address of the terminal apparatus that has started configuration of direct link, and 1538 corresponds to color index 1 and denotes the MAC address of the terminal apparatus that has responded to configuration of direct link. Subsequently, sets of MAC addresses follow in order of the color indexes, and 1539 corresponds to color index 63 and denotes the MAC address of the terminal apparatus that has started configuration of direct link and 1540 corresponds to color index 63 and denotes the MAC address of the terminal apparatus that has responded to configuration of direct link. A field indicating each MAC address is assigned a length of 6 octets in a case that a corresponding bit of the Intra-BSS Color Bitmap field 1534 is 1, and is assigned a length of 0 octets in a case that the corresponding bit is 0. In other words, in a case that a bit corresponding to a certain color index is 0, information of the MAC address is not included and the information therefor is omitted. In the present example, a small value of the color index is assigned to the low-order bit of the Intra-BSS Color Bitmap field, but this is not restrictive, and a small value of the color index may be assigned to the high-order bit. The fields of the MAC addresses of respective terminal apparatuses are arranged in ascending order of the color index, but this is not restrictive, and may be arranged in descending order of the color index. In a case that direct link is configured between the terminal apparatuses supporting intra-BSS SR, the base station apparatus 1-1 updates contents of the color index information element thereof. The updated color index information element may be transmitted to one or more terminal apparatuses connected to the base station apparatus 1-1 by means of broadcast communication, multicast communication, or unicast communication. In a case that the color index information element is requested from one of the connected terminal apparatuses, the base station apparatus 1-1 may transmit the color index information element to the terminal apparatus.

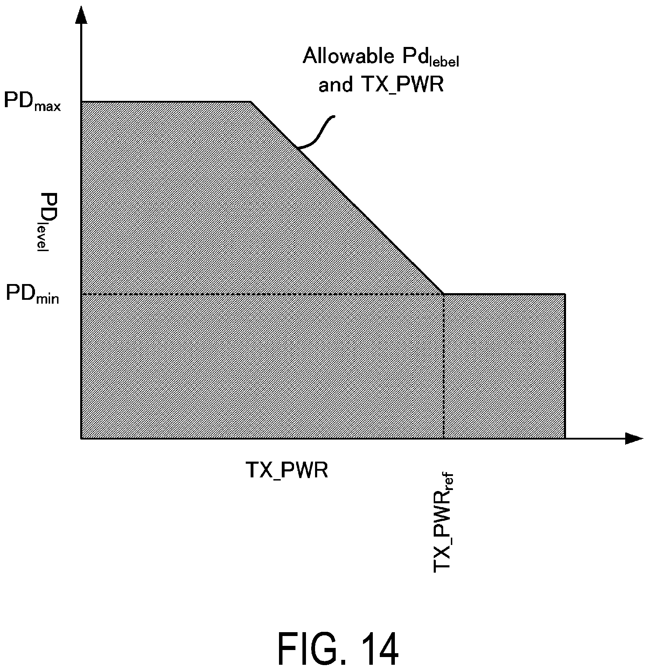

In a case of specifying PD-based SR as the method of intra-BSS SR in a case of configuring direct link, the base station apparatus 1-1 may include information of a power detection level used in PD-based SR in the SR link information. Various methods can be used as the method of configuring the power detection level, and one example thereof is a method in which transmit power and the power detection level are defined in a relational expression, and a maximum value and a minimum value of the power detection level are provided. FIG. 14 illustrates a configuration example of the transmit power and the power detection level. The following relational expression is used, where the power detection level configured in a case that the transmit power is $TX\_PWR_{ref}$ is a minimum power detection level $PD_{min}$, and a maximum power detection level is $PD_{max}$.

$$PD_{level} \leq max(PD_{min}, min(PD_{max}, PD_{min} + (TX\_PWR_{ref} - TX\_PWR))) + log10(PPDU\_BW/20 \text{ MHz})$$

... (Expression 1)

$PD_{level}$ represents the power detection level configured, TX_PWR represents the transmit power configured in a case of transmission of the PPDU, and PPDU_BW represents a frequency bandwidth of the PPDU (radio frame) transmitted. $PD_{max}$ and $PD_{min}$ each have a default value, and can each be configured with an offset value as well. Although the default values of $PD_{max}$ and $PD_{min}$ are not uniquely determined, as an example, the default value of $PD_{max}$ may be set to -62 dBm and the default value of $PD_{min}$ may be set to -82 dBm. The base station apparatus 1-1 may change one or both of $PD_{max}$ and $PD_{min}$. Configuration of changing one or both of $PD_{max}$ and $PD_{min}$ for direct link corresponding to a certain color index may be performed. As a method of changing $PD_{max}$ or $PD_{min}$, the value of $PD_{max}$ or $PD_{min}$ may be directly specified for the change, or the offset value for the default value may be specified for the change. The base station apparatus 1-1 may notify the terminal apparatus of information indicating whether to use the default value or use the changed value, by means of broadcast communication, multicast communication, or unicast communication. As an example, a Spatial Reuse Parameter Set element may be enhanced, and information for performing notification of a parameter for intra-BSS SR together with a parameter set for inter-BSS SR may be generated. FIG. 15(a) illustrates an example of an outline of a structure of such a Spatial Reuse Parameter Set element enhanced (hereinafter an enhanced Spatial Reuse Parameter Set element). 1501 is an element ID, 1503 is an element ID extension, and a type of the information element is identified using these two fields. 1502 is a length field, and indicates the overall length of the information element. 1504 is an SR control field, and as an example, includes information indicating whether PSR-based SR is not accepted as inter-BSS SR, whether Non-SRG OBSS PD SR is not accepted as inter-BSS SR, whether a Non-SRG Offset field for inter-BSS SR is present, whether an SRG information field for inter-BSS SR is present, whether a specific value is used for an SIG field, and whether a control field for intra-BSS SR is included. 1505 is the Non-SRG Offset field, which may not be present depending on the value of the SR control field. 1506 is an SRG OBSS PD Min Offset field, 1507 is an SRG OBSS PD Max Offset field, 1508 is SRG BSS Color Bitmap, and 1509 is SRG Partial BSSID Bitmap, each of which may not be present depending on the value of the SR control field 1504. 1510 is a control field for intra-BSS SR, which may not be present depending on the value of the SR control field 1504. The control field for intra-BSS SR 1510 includes information indicating whether PSR-based SR is not accepted as intra-BSS SR, whether PD-based SR is not accepted as intra-BSS SR, whether bitmap information (Intra-BSS Color Bitmap 1) corresponding to offset information applied to PDmin referred to in a case of performing PD-based SR in intra-BSS SR is present, and whether bitmap information (Intra-BSS Color Bitmap 2) corresponding to offset information applied to PDmax referred to in a case of performing PD-based SR in intra-BSS SR is present. 1511 is bitmap information, and each bit of 8 octets (= 64 bits) indicates for which color index the offset value of PDmin is configured. The least significant bit corresponds to color index 0, and the most significant bit corresponds to color index 63. In a case that the value of the bit is 0, it is indicated that the offset value of PDmin is not configured for a corresponding color index, and in a case that the value of the bit is 1, it is indicated that the offset value of PDmin is configured for the corresponding color index. 1512 is bitmap information, and each bit of 8 octets indicates for which color index the offset value of PDmax is configured. The least significant bit corresponds to color index 0, and the most significant bit corresponds to color index 63. In a case that the value of the bit is 0, it is indicated that the offset value of PDmax is not configured for a corresponding color index, and in a case that the value of the bit is 1, it is indicated that the offset value of PDmax is configured for the corresponding color index. 1513 to 1518 are fields including the offset values of PDmin and PDmax configured for the color indexes. In the example illustrated in FIG. 15(a), both of the offset values of PDmin and the offset values of PDmax are arranged in ascending order of the color index; however, the offset values of PDmin may be arranged in order of the color index and then the offset values of PDmax may be arranged in order of the color index. The arrangement may be in either ascending order or descending order of the color index. In the present embodiment, the color indexes are configured for PD-based intra-BSS SR, and a field for setting the offset value to 0 in a case that the offset is not applied to PDmax or PDmin is prepared. However, as a modification, a bitmap indicating whether PD-based intra-BSS SR is performed for each of the color indexes and a bitmap indicating whether the offset values of PDmin and PDmax used in a case of performing PD-based intra-BSS SR are configured may be separately provided. A bitmap indicating whether PSR-based intra-BSS SR is performed for each of the color indexes may be provided.

After updating the enhanced Spatial Reuse Parameter Set element, the base station apparatus 1-1 may transmit to one or more terminal apparatuses connected to the base station apparatus 1-1 by means of broadcast communication, multicast communication, or unicast communication. In this case, the color index information element may be transmitted together.

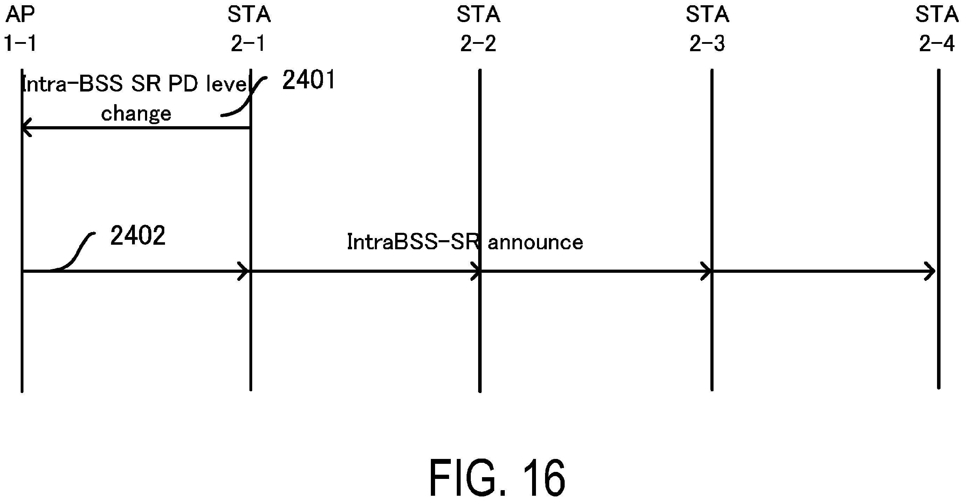

After PDmin and PDmax referred to in a case of performing PD-based SR in intra-BSS SR are configured once, changing the configuration of the power detection level, in other words, PDmin or PDmax, may be desired, due to changes of positions and a surrounding radio wave propagation environment of the terminal apparatuses configured with direct link and the like. In such a case, changing one or both of configured PDmin and PDmax for configured direct link may be requested from the terminal apparatus to the base station apparatus. An example of a flow related to the request is illustrated in FIG. 16. In the present example, the terminal apparatus 2-1 requests the base station apparatus 1-1 to change the power detection level. 2401 is an Intra-BSS SR PD level change message transmitted from the terminal apparatus 2-1 to the base station apparatus 1-1. The terminal apparatus 2-1 may include, in the Intra-BSS SR PD level change message 2401, the offset value of changed PDmin, the offset value of changed PDmax, or information for the base station apparatus 1-1 to determine the offset value of PDmin or the offset value of PDmax, one example of which is information indicating path loss between the terminal apparatus 2-1 and the terminal apparatus 2-2 and the like. The terminal apparatus 2-1 may include, in the Intra-BSS SR PD level change message 2401, the color index assigned to direct link currently configured, the MAC address of the terminal apparatus 2-1 supporting direct link currently configured, and the MAC address of a counterpart terminal apparatus of the direct link. After receiving the Intra-BSS SR PD level change message 2401, the base station apparatus 1-1 may include the updated enhanced Spatial Reuse Parameter Set element in an IntraBSS-SR announcement 2402, and transmit to one or more terminal apparatuses connected to the base station apparatus 1-1 by means of broadcast communication, multicast communication, or unicast communication. In this case, the color index information element may be transmitted together.

As the method of exchanging the capability information in a case that a certain terminal apparatus configures direct link with another terminal apparatus, an example of exchanging the capability information related to intra-BSS SR in a series of direct link setup procedures has been described. However, the exchange of the capability information related to intra-BSS SR may be performed with another method. As an example, a case of exchanging the capability information related to intra-BSS SR in a direct link discovery procedure will be described. FIG. 13(c) is an example of the direct link discovery procedure. Here, a case is illustrated in which the terminal apparatus 2-1 initiates the direct link discovery procedure, and the terminal apparatus 2-2 responds to the initiation. First, the terminal apparatus 2-1 transmits the direct link discovery request to the terminal apparatus 2-2 via the base station apparatus 1-1. 2121 is the direct link discovery request to the base station apparatus, and 2122 is the direct link discovery request to the terminal apparatus 2-2. After receiving the direct link discovery request 2122, the terminal apparatus 2-2 transmits a direct link discovery response 2123 to the terminal apparatus 2-1. The terminal apparatus 2-1 can include the capability information related to intra-BSS SR of the terminal apparatus 2-1 in the direct link discovery requests 2121 and 2122, and the terminal apparatus 2-2 can include the capability information related to intra-BSS SR in the direct link discovery response 2123.

Next, a procedure of a case of canceling direct link supporting intra-BSS SR will be described. FIG. 13(a) illustrates an example of a flow of canceling direct link supporting intra-BSS SR. In the flow, direct link supporting intra-BSS SR configured between the terminal apparatus 2-1 and the terminal apparatus 2-2 is canceled. First, the terminal apparatus 2-1 transmits direct link teardown (direct link disablement) to the terminal apparatus 2-2 via the base station apparatus 1-1. 2101 is the direct link teardown to the base station apparatus 1-1, and 2102 is the direct link teardown to the terminal apparatus 2-2. In a case of canceling direct link not supporting intra-BSS SR, a certain terminal apparatus has hitherto determined, in a case of transmitting the direct link disablement to another terminal apparatus, whether to directly communicate the direct link disablement or transmit the direct link disablement via the base station apparatus. As an example, in a case that an error occurs in direct transmission of the direct link disablement to another terminal apparatus, it has hitherto been determined to transmit the direct link disablement via the base station apparatus. However, in the present embodiment, in a case of canceling direct link supporting intra-BSS SR, the terminal apparatus 2-1 transmits the direct link teardowns 2101 and 2102 to the terminal apparatus 2-2 via the base station apparatus 1-1 without determining whether to directly transmit the direct link teardowns 2101 and 2102 to the terminal apparatus 2-2 or transmit the direct link teardowns 2101 and 2102 via the base station apparatus 1-1. In this case, the terminal apparatus 2-1 may include information of a corresponding color index in the direct link teardowns 2101 and 2102. The terminal apparatus 2-2 that has received the direct link teardown 2102 cancels configuration of direct link configured with the terminal apparatus 2-1, and the terminal apparatus 2-1 that has confirmed transmission of the direct link teardowns 2101 and 2102 cancels configuration of direct link configured with the terminal apparatus 2-2.

After receiving the direct link teardown 2101, the base station apparatus determines whether the direct link that the direct link teardown 2101 is to disable supports intra-BSS SR, based on a transmission source and a transmission destination of the direct link teardown 2101 or the color index included in the direct link teardown 2101, and in a case that the direct link that the direct link teardown 2101 is to cancel supports intra-BSS SR, the base station apparatus deletes the enhanced Spatial Reuse Parameter Set element and the information related to the direct link to be canceled by the direct link teardown 2101 from the color index information element. As an example, a bit corresponding to the color index associated with the direct link to be canceled by the direct link teardown 2101 in the Intra-BSS Color Bitmap field of the color index information element is set to 0, and a field of the MAC address corresponding to the bit set to 0 is deleted. A bit corresponding to the color index associated with the direct link to be canceled by the direct link teardown 2101 in the Intra-BSS Color Bitmap 1 field and the Intra-BSS Color Bitmap 2 field of the enhanced Spatial Reuse Parameter Set element is set to 0, and an Intra-BSS PD Min field or an Intra-BSS PD Max field corresponding to the bit set to 0 are deleted. After updating by deleting the enhanced Spatial Reuse Parameter Set element and the information related to the direct link to be canceled by the direct link teardown 2101 from the color index information element, the base station apparatus 1-1 may transmit an IntraBSS-SR announce message 2103 including one or both of the enhanced Spatial Reuse Parameter Set element and the color index information element to one or more terminal apparatuses.

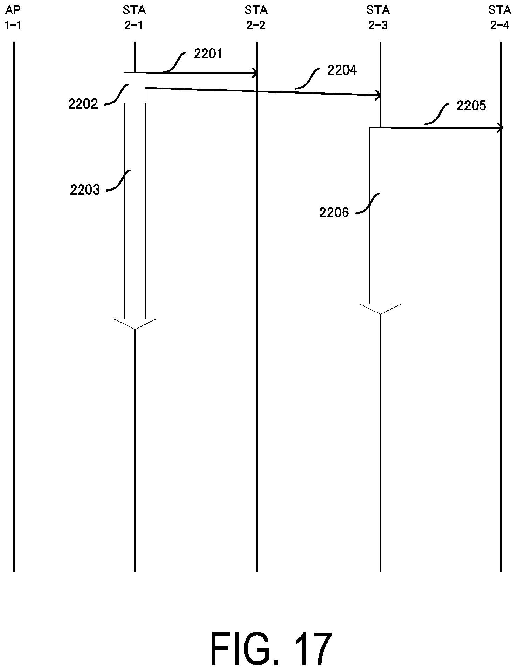

Next, an example of a flow in a case that intra-BSS SR is performed within the BSS will be described. It is assumed that the flow of the configuration described with reference to FIG. 12 is performed, direct link supporting intra-BSS SR is configured between the terminal apparatus 2-1 and the terminal apparatus 2-2, and direct link supporting intra-BSS SR is configured between the terminal apparatus 2-3 and the terminal apparatus 2-4. It is assumed that, regarding the SR link information, the SR link information is shared owing to the enhanced Spatial Reuse Parameter Set element and the information of the color index information element transmitted from the base station apparatus 1-1 to the terminal apparatus 2-1 to the terminal apparatus 2-4. It is assumed that the color index associated with direct link between the terminal apparatus 2-1 and the terminal apparatus 2-2 is 1, the color index associated with direct link between the terminal apparatus 2-3 and the terminal apparatus 2-4 is 2, color index 1 indicates the terminal apparatus 2-1 and the terminal apparatus 2-2, and color index 2 indicates the terminal apparatus 2-3 and the terminal apparatus 2-4. It is assumed that, owing to the enhanced Spatial Reuse Parameter Set element, the offset values for PDmin and PDmax corresponding to color index 1 and the offset values for PDmin and PDmax corresponding to color index 2 are configured. An example in which direct link is performed from the terminal apparatus 2-1 to the terminal apparatus 2-2 in this state and the terminal apparatus 2-3 performs SR for the direct link for the terminal apparatus 2-4 for the direct link will be described with reference to FIG. 17.

First, a case that PD-based SR is performed will be described. 2201 denotes that a radio frame is transmitted from the terminal apparatus 2-1 to the terminal apparatus 2-2. 2202 denotes the PHY header including the SIG field of the radio frame transmitted, and 2203 denotes a data frame subsequent to the PHY header 2202. The terminal apparatus 2-1 includes color index 1 in the SIG field of the PHY header 2202. The terminal apparatus 2-1 may include BSS Color received from the base station apparatus 1-1 in the SIG field in the PHY header 2202.

The terminal apparatus 2-3 has transmission data to be transmitted to the terminal apparatus 2-4 but does not start transmission, with the terminal apparatus 2-1 detecting the radio frame transmitted to the terminal apparatus 2-2. This state is referred to as CCA busy. Subsequently, the terminal apparatus 2-3 receives the PHY header 2202 that the terminal apparatus 2-1 transmits to the terminal apparatus 2-2, and confirms the color index included in the PHY header. The color index is 1, and thus from the information included in the color index information element received from the base station apparatus 1-1, the radio frame being received is identified as direct link between the terminal apparatus 2-1 and the terminal apparatus 2-2. The terminal apparatus 2-1 and the terminal apparatus 2-2 determine that this is neither for the terminal apparatus 2-4 being a destination of the transmission data to be transmitted nor for the terminal apparatus 2-3, and the terminal apparatus 2-3 proceeds to determination of received power of the radio frame being received. The terminal apparatus 2-3 configures transmit power in a case of transmitting the data to the terminal apparatus 2-4. Various methods can be used as the method of configuring the transmit power. As an example, a method of configuring based on path loss between the terminal apparatus 2-3 and the terminal apparatus 2-4 measured using the direct link discovery procedure or the like that the terminal apparatus 2-3 performs for the terminal apparatus 2-4 or the like may be used. Using the configured transmit power, the power detection level is calculated using (Expression 1). In a case of calculating the power detection level, the terminal apparatus 2-3 uses PDmin and PDmax corresponding to color index 1 obtained from the information included in the enhanced Spatial Reuse Parameter Set element received from the base station apparatus 1-1. The terminal apparatus 2-3 measures the received power by using the PHY header 2202 that the terminal apparatus 2-1 transmits to the terminal apparatus 2-2, and in a case that the measured received power falls below the power detection level calculated using (Expression 1), the terminal apparatus 2-3 performs CCA reset. With this, CCA busy of the terminal apparatus 2-3 is disabled, and the terminal apparatus 2-3 performs transmission 2205 of the data to the terminal apparatus 2-4. Regarding a radio frame 2206 transmitted in the transmission 2205 of the data, the terminal apparatus 2-3 may complete transmission of the radio frame 2206 before transmission of radio frames 2202 and 2204 that the terminal apparatus 2-1 transmits to the terminal apparatus 2-2 completes. In a case that the terminal apparatus 2-3 confirms the color index included in the PHY header, and one of the two terminal apparatuses associated with the color index is the terminal apparatus 2-3 or the terminal apparatus 2-4, CCA reset need not be performed while receiving the radio frame regardless of the received power of the radio frame being received. In a case that information of not accepting intra-BSS SR is included in the radio frame PHY header 2202 being received, the terminal apparatus 2-3 need not perform CCA reset while receiving the radio frame. In a case that the information of not accepting intra-BSS SR is not included in the radio frame PHY header 2202 being received and the terminal apparatus associated with the color index and the received power satisfy the above-described condition, the terminal apparatus 2-3 may perform CCA reset. In a case of determination of CCA reset, it may be confirmed as well that BSS Color included in the PHY header 2202 and BSS Color that the terminal apparatus 2-3 receives from the base station apparatus 1-1 are the same.

Next, a case that PSR-based SR is performed will be described. The flow will be described with reference to FIG. 17. The radio frame is transmitted from the terminal apparatus 2-1 to the terminal apparatus 2-2 (2201). 2202 denotes the PHY header including the SIG field of the radio frame transmitted, and 2203 denotes a data frame subsequent to the PHY header 2202. The terminal apparatus 2-1 includes color index 1 and information indicating a PSR value in the SIG field in the PHY header 2202. The information indicating the PSR value may be in various forms. As an example, the PSR value itself or an index corresponding to the PSR value may be used.

The terminal apparatus 2-3 has transmission data to be transmitted to the terminal apparatus 2-4 but does not start transmission, with the terminal apparatus 2-1 detecting the radio frame transmitted to the terminal apparatus 2-2. Subsequently, the terminal apparatus 2-3 receives the PHY header 2202 that the terminal apparatus 2-1 transmits to the terminal apparatus 2-2, and confirms the color index included in the PHY header and the information indicating the PSR value. The color index is 1, and thus from the information included in the color index information element received from the base station apparatus 1-1, the radio frame being received is identified as direct link between the terminal apparatus 2-1 and the terminal apparatus 2-2. The terminal apparatus 2-1 and the terminal apparatus 2-2 determine that this is neither for the terminal apparatus 2-4 being a destination of the transmission data to be transmitted nor for the terminal apparatus 2-3, and the terminal apparatus 2-3 proceeds to determination of received power of the radio frame being received. The terminal apparatus 2-3 configures transmit power in a case of transmitting the data to the terminal apparatus 2-4. Various methods can be used as the method of configuring the transmit power. As an example, a method of configuring based on path loss between the terminal apparatus 2-3 and the terminal apparatus 2-4 measured using the direct link discovery procedure or the like that the terminal apparatus 2-3 performs for the terminal apparatus 2-4 or the like may be used. Using the configured transmit power, PSR opportunity is identified using the PSR value calculated from the information indicating the PSR value. The terminal apparatus 2-3 measures the received power by using the PHY header 2202 that the terminal apparatus 2-1 transmits to the terminal apparatus 2-2, and in a case that the received power, the PSR value, and the transmit power satisfy a certain relationship, the terminal apparatus 2-3 identifies PSR opportunity. The relationship may be in various forms. As an example, in a case that the following relational expression is satisfied, PSR opportunity is identified.

$$\text{Transmit power} < \text{PSR value} - \text{Received power} \dots \text{(Expression 2)}$$

In a case of identifying PSR opportunity, the terminal apparatus 2-3 considers to have obtained a transmission opportunity and performs the transmission 2205 of the data to the terminal apparatus 2-4. Regarding the radio frame 2206 transmitted in the transmission 2205 of the data, the terminal apparatus 2-3 may complete transmission of the radio frame 2206 before transmission of the radio frames 2202 and 2204 that the terminal apparatus 2-1 transmits to the terminal apparatus 2-2 completes. In a case that the terminal apparatus 2-3 confirms the color index included in the PHY header, and one of the two terminal apparatuses associated with the color index is the terminal apparatus 2-3 or the terminal apparatus 2-4, identification of PSR opportunity need not be performed while receiving the radio frame regardless of the received power of the radio frame being received. In a case that information of not accepting intra-BSS SR is included in the radio frame PHY header 2202 being received, the terminal apparatus 2-3 need not perform identification of PSR opportunity while receiving the radio frame. In a case that the information of not accepting intra-BSS SR is not included in the radio frame PHY header 2202 being received and the terminal apparatus associated with the color index, the received power, and the PSR value satisfy the above-described condition, the terminal apparatus 2-3 may perform identification of PSR opportunity. In a case of identification of PSR opportunity, it may be confirmed as well that BSS Color included in the PHY header 2202 and BSS Color that the terminal apparatus 2-3 receives from the base station apparatus are the same.

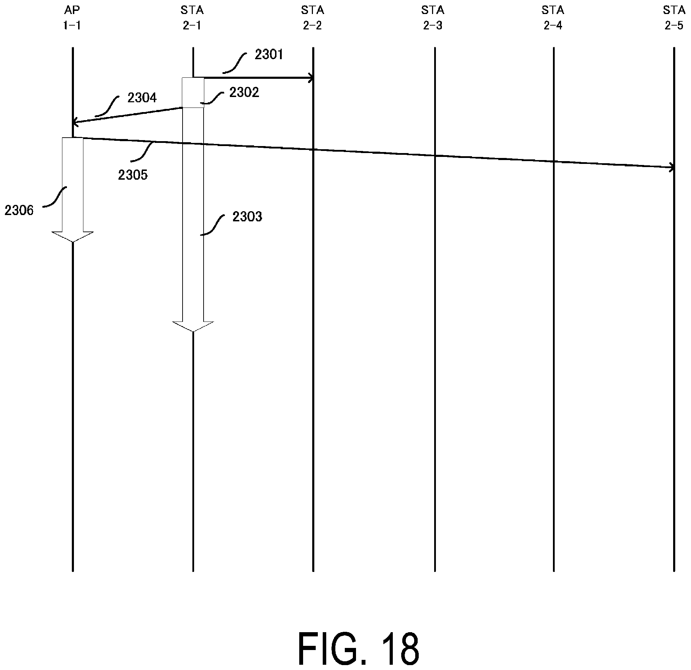

In the above, as intra-BSS SR, a case that PD-based SR and PSR-based SR are performed regarding multiple direct links has been described. intra-BSS SR is not limited to multiple direct links, and can also be performed for communication between the base station apparatus and the terminal apparatus as well. An example in which PSR-based SR is performed will be described with reference to FIG. 18. FIG. 18 illustrates an example in which the base station apparatus 1-1 that has received direct link 2301 that the terminal apparatus 2-1 transmits to the terminal apparatus 2-2 performs SR for the terminal apparatus 2-5. The base station apparatus 1-1 receives a PHY header 2302 of direct link 2301 that the terminal apparatus 2-1 transmits to the terminal apparatus 2-2, and suspends transmission to the terminal apparatus 2-5. The base station apparatus 1-1 may determine that the direct link 2301 is not related to a counterpart of communication being suspended and the base station apparatus 1-1 by using the color index included in the PHY header and the information indicating the PSR value received, and determine whether the relationship between the PSR value calculated from the information indicating the PSR value and the received power and the transmit power of the PHY header satisfies (Expression 2). In a case that the relationship satisfies (Expression 2), the base station apparatus 1-1 may consider to have identified PSR opportunity and perform transmission 2305 using SR to the terminal apparatus 2-5. In this case, the base station apparatus 1-1 may adjust the length of a data part 2306 of the transmission 2305 for the terminal apparatus 2-5 so as to be accommodated in the length of a data part 2303 transmitted by the terminal apparatus 2-1 to the terminal apparatus 2-2. In a case of identification of PSR opportunity, it may be confirmed as well that BSS Color included in the PHY header 2302 indicates BSS managed by the base station apparatus 1-1. The operation can also be performed similarly for PD-based SR instead of PSR-based SR.

Through the operations as described above, by obtaining a new transmission opportunity during transmission of another terminal apparatus, communication efficiency within the BSS can be enhanced. By using power of the radio frame transmitted during obtaining of the transmission opportunity and other configured conditions, multiple sets of communications can be established. The present embodiment has described an example in which intra-BSS SR is performed between the base station apparatus and the terminal apparatus that have exchanged the capability information related to intra-BSS SR, but other information may be referred to in a case of performing intra-BSS SR. As an example, intra-BSS SR may be performed for data used by a certain type of application such as one in which traffic with high priority and/or with low latency is specified. With this, communication efficiency can be improved in coordination with the application.

2. Matters Common For All Embodiments

Although the communication apparatuses according to the present invention can perform communication in a frequency band (frequency spectrum) that is a so-called unlicensed band that does not require permission to use from a country or a region, available frequency bands are not limited thereto. The communication apparatus according to the present invention can exhibit its effect in a frequency band called a white band, which is actually not used for the purpose of preventing frequency jamming regardless of a nation or a region allowing utilization thereof for a specific service (for example, a frequency band allocated for television broadcasting or a frequency band which is not used depending on regions), or a shared spectrum (shared frequency band) which is expected to be shared by multiple service providers, for example.

A program that operates in the radio communication apparatus according to the present invention is a program (a program for causing a computer to function) for controlling the CPU or the like to implement the functions of the aforementioned embodiments related to the present invention. In addition, information handled by these apparatuses is temporarily accumulated in a RAM at the time of processing, is then stored in various types of ROMs and HDDs, and is read by the CPU as necessary to be corrected and written. A semiconductor medium (e.g., a ROM, a non-volatile memory card, etc.), an optical recording medium (e.g., a DVD, an MO, an MD, a CD, a BD, etc.), a magnetic recording medium (e.g., a magnetic tape, a flexible disk, etc.), and the like can be examples of recording media for storing programs. In addition to implementing the functions of the aforementioned embodiments by performing loaded programs, the functions of the present invention are implemented in processing performed in cooperation of an operating system, other application programs, and the like based on instructions of those programs.

In a case of delivering these programs to market, the programs can be stored and distributed in a portable recording medium, or transferred to a server computer connected via a network such as the Internet. In this case, the storage device serving as the server computer is also included in the present invention. In addition, a part or an entirety of the communication apparatuses in the aforementioned embodiments may be implemented as an LSI that is typically an integrated circuit. The functional blocks of the communication apparatuses may be individually implemented as chips or may be partially or completely integrated into a chip. In a case that the functional blocks are made as integrated circuits, an integrated circuit controller for controlling them is added.

In addition, the circuit integration technique is not limited to LSI, and may be realized as dedicated circuits or a multi-purpose processor. Moreover, in a case that a circuit integration technology that substitutes an LSI appears with the advance of the semiconductor technology, it is also possible to use an integrated circuit based on the technology.

Note that, the invention of the present application is not limited to the above-described embodiments. The radio communication apparatus according to the invention of the present application is not limited to the application in the mobile station apparatus, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

Although the embodiments of the invention have been described in detail above with reference to the drawings, a specific configuration is not limited to the embodiments, and designs and the like that do not depart from the essential spirit of the invention also fall within the claims.

Industrial Applicability

The present invention can be preferably used in a communication apparatus and a communication method.

Reference Signs List

1-1, 1-2, 2-1 to 2-6, 2A, 2B Radio communication apparatus
3-1, 3-2 Control range
7-1, 7-2, 7-3, 7-4 Sector
10-1 Radio communication apparatus

10001-1 Upper layer part
10002-1 (Autonomous distributed) controller
10002a-1 CCA part
10002b-1 Backoff part
10002c-1 Transmission determination part
10003-1 Transmitter
10003a-1 Physical layer frame generator
10003b-1 Radio transmitting unit
10004-1 Receiver
10004a-1 Radio receiving unit
10004b-1 Signal demodulator
10004c-1 Evaluator
10005-1 Antenna
100-1, 100-3, 100-6, 100-11 Busy state
100-4, 100-7 Random backoff
100-2, 100-5, 100-8, 100-10 Radio frame
1401, 1421 Radio frame

## Claims

1. A first radio terminal apparatus comprising:

   a transmitter configured to transmit a transmission frame; and
   a receiver configured to receive a reception frame, wherein
   the receiver receives SR link information and the reception frame,
   the SR link information includes

   information indicating a second radio terminal apparatus,
   information indicating a third radio terminal apparatus,
   a color index associated with the information indicating the second radio terminal apparatus and the information indicating a third radio terminal apparatus, and
   information of a power detection level applied to a combination of the second radio terminal apparatus and the third radio terminal apparatus,

   the color index is included in a PHY header of the reception frame being received, and
   in a case that a fourth radio terminal apparatus is different from the second radio terminal apparatus and the third radio terminal apparatus and received power of the reception frame being received falls below the power detection level determined based on transmit power and the information of the power detection level applied to the combination of the second radio terminal apparatus and the third radio terminal apparatus, CCA reset is performed.

2. The first radio terminal apparatus according to claim 1, wherein
   after performing the CCA reset, the first radio terminal apparatus transmits, to the fourth radio terminal apparatus, the transmission frame with the transmit power.

3. The first radio terminal apparatus according to any of the preceding claims, wherein
   in a case that the fourth radio terminal apparatus is the second radio terminal apparatus or the third radio terminal apparatus, the first radio terminal apparatus does not perform the CCA reset.

4. The first radio terminal apparatus according to any of the preceding claims, wherein
   in a case that information disallowing intra-BSS SR is not included in the PHY header of the reception frame being received, the first radio terminal apparatus performs the CCA reset.

5. A fifth radio terminal apparatus comprising:

   a transmitter configured to transmit a transmission frame; and
   a receiver configured to receive a reception frame, wherein

the receiver receives SR link information,
the SR link information at least includes
information indicating the fifth radio terminal apparatus,
information indicating a sixth radio terminal apparatus, and
a color index associated with the information indicating the fifth radio terminal apparatus and the information indicating the sixth radio terminal apparatus, and
in a case that direct link is performed for the sixth radio terminal apparatus, the color index is included in a PHY header of the transmission frame.

6. A radio communication method used in a first radio terminal apparatus, the radio communication method comprising:

receiving SR link information and a reception frame,
the SR link information including

information indicating a second radio terminal apparatus,
information indicating a third radio terminal apparatus,
a color index associated with the information indicating the second radio terminal apparatus and the information indicating a third radio terminal apparatus, and
information of a power detection level applied to a combination of the second radio terminal apparatus and the third radio terminal apparatus,

the color index being included in a PHY header of the reception frame being received; and
in a case that a fourth radio terminal apparatus is different from the second radio terminal apparatus and the third radio terminal apparatus and received power of the reception frame being received falls below the power detection level determined based on transmit power and the information of the power detection level applied to the combination of the second radio terminal apparatus and the third radio terminal apparatus, performing CCA reset.

7. A radio communication method used in a fifth radio terminal apparatus, the radio communication method comprising:

receiving SR link information,
the SR link information at least including
information indicating the fifth radio terminal apparatus,
information indicating a sixth radio terminal apparatus, and
a color index associated with the information indicating the fifth radio terminal apparatus and the information indicating the sixth radio terminal apparatus; and
in a case that direct link is performed for the sixth radio terminal apparatus, including the color index in a PHY header of a transmission frame.

RESOURCE SPLITTING EXAMPLE 1

RESOURCE SPLITTING EXAMPLE 2

RESOURCE SPLITTING EXAMPLE 3

RESOURCE SPLITTING EXAMPLE 4

SUBCARRIER
INDEX

MINIMUM SUBCARRIER
INDEX

DC SUBCARRIER

MAXIMUM SUBCARRIER
INDEX

FIG. 1

EP 4 312 458 A1

EP 4 312 458 A1

**IEEE 802.11a/b/g**

| L-STF | L-LTF | L-SIG | Data |
|---|---|---|---|

**IEEE 802.11n**

| L-STF | L-LTF | L-SIG | HT-SIG | HT-STF | HT-LTF | Data |
|---|---|---|---|---|---|---|

**IEEE 802.11ac**

| L-STF | L-LTF | L-SIG | VHT-SIG-A | VHT-STF | VHT-LTF | VHT-SIG-B | Data |
|---|---|---|---|---|---|---|---|

**IEEE 802.11ax**

| L-STF | L-LTF | L-SIG | RL-SIG | HE-SIG-A | HE-STF | HE-LTF | HE-SIG-B | Data |
|---|---|---|---|---|---|---|---|---|

**IEEE 802.11be**

| L-STF | L-LTF | L-SIG | RL-SIG | U-SIG | EHT-SIG | EHT-STF | EHT-LTF | Data |
|---|---|---|---|---|---|---|---|---|

# FIG. 2

TXTIME

aPLCPHeaderLength

aPreambleLength

L_LENGTH/L_RATE

| L-STF | L-LTF | L-SIG | VHT-SIG-A | VHT-STF | VHT-LTF | VHT-SIG-B | MAC Frame |

L_RATE
L_LENGTH

# FIG. 3

FIG. 4

FIG. 5

FIG. 6

FIG. 7

FIG. 8

| Frame Control | Duration /ID | Address1 | Address2 | Address3 | Sequence Control | Address4 | QoS Control | HT Control | Frame Body | FCS |
|---|---|---|---|---|---|---|---|---|---|---|

MAC header

# FIG. 9

FIG. 10

FIG. 11

FIG. 12

EP 4 312 458 A1

FIG. 13

Allowable Pd$_{lebel}$ and TX_PWR

PD$_{max}$

PD$_{level}$

PD$_{min}$

TX_PWR$_{ref}$

TX_PWR

FIG. 14

| Element ID | Length | Element ID Extension | SR Control | Non-SRG OBSS PD Max Offset | SRG OBSS PD Min Offset | SRG OBSS PD Max Offset | SRG BSS Color Bitmap | SRG Partial BSSID Bitmap | Intra-BSS SR Control | Intra-BSS Color Bitmap 1 | Intra-BSS Color Bitmap 2 |
|---|---|---|---|---|---|---|---|---|---|---|---|
| 1501 | 1502 | 1503 | 1504 | 1505 | 1506 | 1507 | 1508 | 1509 | 1510 | 1511 | 1512 |

Octet    1       1       1       1     0 or 1   0 or 1   0 or 1   0 or 8   0 or 8   0 or 1   0 or 8   0 or 8

| Intra-BSS PD Min Offset 0 | Intra-BSS PD Max Offset 0 | Intra-BSS PD Min Offset 1 | Intra-BSS PD Max Offset 1 | · · · · · | Intra-BSS PD Min Offset 63 | Intra-BSS PD Max Offset 63 |
|---|---|---|---|---|---|---|
| 1513 | 1514 | 1515 | 1516 | | 1517 | 1518 |

      0 or 1    0 or 1    0 or 1    0 or 1           0 or 1    0 or 1

(a)

| Element ID | Length | Element ID Extension | Intra-BSS Color Bitmap | MAC Address 0-1 | MAC Address 0-2 | MAC Address 1-1 | MAC Address 1-2 | · · · · · | MAC Address 63-1 | MAC Address 63-2 |
|---|---|---|---|---|---|---|---|---|---|---|
| 1531 | 1532 | 1533 | 1534 | 1535 | 1536 | 1537 | 1538 | | 1539 | 1540 |

Octet   1      2       1       8     0 or 6   0 or 6   0 or 6   0 or 6       0 or 6   0 or 6

(b)

# FIG. 15

AP
1-1

STA
2-1

STA
2-2

STA
2-3

STA
2-4

Intra-BSS SR PD level
change

2401

2402

IntraBSS-SR announce

EP 4 312 458 A1

FIG. 16

EP 4 312 458 A1

FIG. 17

FIG. 18

EP 4 312 458 A1

Europäisches
Patentamt

European
Patent Office

Office européen
des brevets

# EUROPEAN SEARCH REPORT

Application Number

EP 23 16 0469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/110297 A1 (HEDAYAT AHMAD REZA [US] ET AL) 11 April 2019 (2019-04-11)<br>* figure 1 *<br>* paragraph [0012] *<br>* paragraph [0071] *<br>* paragraph [0106] *<br>* paragraph [0127] *<br>* paragraph [0134] *<br>----- | 1-7 | INV.<br>H04W74/00<br>H04W52/04 |
| Y | US 2019/141749 A1 (SEOK YONGHO [US] ET AL) 9 May 2019 (2019-05-09)<br>* paragraph [0054] *<br>----- | 1-7 | |
| | | | TECHNICAL FIELDS SEARCHED (IPC)<br><br>H04W |

The present search report has been drawn up for all claims

| Place of search | Date of completion of the search | Examiner |
|---|---|---|
| The Hague | 6 December 2023 | Iavarone, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 0469

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2023

| Patent document cited in search report | | Publication date | Patent family member(s) | | Publication date |
|---|---|---|---|---|---|
| US 2019110297 | A1 | 11-04-2019 | US | 10172137 B1 | 01-01-2019 |
| | | | US | 2019110297 A1 | 11-04-2019 |
| | | | US | 2021266906 A1 | 26-08-2021 |
| | | | US | 2023088296 A1 | 23-03-2023 |
| US 2019141749 | A1 | 09-05-2019 | EP | 3481129 A1 | 08-05-2019 |
| | | | TW | 201924375 A | 16-06-2019 |
| | | | US | 2019141749 A1 | 09-05-2019 |

EPO FORM P0459

For more details about this annex : see Official Journal of the European Patent Office, No. 12/82

**EP 4 312 458 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *IEEE 802.11-20/1046-08-0be,* July 2020